# EUROPEAN PATENT APPLICATION

(11) **EP 4 648 526 A1**
(43) Date of publication of application: **12.11.2025**
(21) Application number: 24738787.1
(22) Date of filing: 05.01.2024
(51) Int. Cl.: H04W 72/542, H04W 72/541, H04W 72/25, H04W 72/56, H04W 4/40, H04W 92/18, H04W 72/04

(54) **MULTI-PANEL TRANSMISSION AND RECEPTION-BASED NR SIDELINK COMMUNICATION METHOD AND APPARATUS**

(30) Priority: 06.01.2023 KR 20230002413; 06.01.2023 KR 20230002418; 16.02.2023 US 202363446348 P
(71) Applicant: LG Electronics Inc., Yeongdeungpo-gu Seoul 07336 (KR)
(72) Inventor: HWANG, Daesung, Seoul 06772 (KR); LEE, Seungmin, Seoul 06772 (KR)
(74) Representative: Maikowski & Ninnemann Patentanwälte Partnerschaft mbB
(86) International application number: PCT/KR2024/095004
(87) International publication number: WO 2024/147719

(57) **Abstract**

Proposed is an operating method of a first device (100) in a wireless communication system. The method may comprise the steps of: determining N PSFCH transmissions to be transmitted on at least one resource included in a first PSFCH transmission opportunity; and performing the N PSFCH transmissions on the basis of the at least one resource and a first spatial configuration for the smallest value among at least one priority value related to the N PSFCH transmissions.

## Description

### TECHNICAL FIELD

This disclosure relates to a wireless communication system.

### BACKGROUND

Sidelink (SL) communication is a communication scheme in which a direct link is established between User Equipments (UEs) and the UEs exchange voice and data directly with each other without intervention of an evolved Node B (eNB). SL communication is under consideration as a solution to the overhead of an eNB caused by rapidly increasing data traffic. Vehicle-to-everything (V2X) refers to a communication technology through which a vehicle exchanges information with another vehicle, a pedestrian, an entity having an infrastructure (or infra) established therein, and so on. The V2X may be spread into 4 types, such as vehicle-to-vehicle (V2V), vehicle-to-infrastructure (V2I), vehicle-to-network (V2N), and vehicle-to-pedestrian (V2P). The V2X communication may be provided via a PC5 interface and/or Uu interface.

Meanwhile, as a wider range of communication devices require larger communication capacities, the need for mobile broadband communication that is more enhanced than the existing Radio Access Technology (RAT) is rising. Accordingly, discussions are made on services and user equipment (UE) that are sensitive to reliability and latency. And, a next generation radio access technology that is based on the enhanced mobile broadband communication, massive Machine Type Communication (MTC), Ultra-Reliable and Low Latency Communication (URLLC), and so on, may be referred to as a new radio access technology (RAT) or new radio (NR).

### DISCLOSURE

### TECHNICAL SOLUTION

According to an embodiment of the present disclosure, a method for performing, by a first device, wireless communication may be proposed. For example, the method may comprise: performing a plurality of physical sidelink shared channel, PSSCH, receptions based on a plurality of PSSCH resources, from a plurality of devices; determining a plurality of physical sidelink feedback channel, PSFCH, resources, for performing a plurality of PSFCH transmissions related to the plurality of PSSCH reception, based on the plurality of PSSCH resource; determining N PSFCH transmissions to be transmitted on at least one resource among the plurality of PSFCH transmissions, that is included in a first PSFCH transmission occasion among the plurality of PSFCH resources; and performing the N PSFCH transmissions based on, a first spatial setting for a smallest value among at least one priority values related to the N PSFCH transmissions, and the at least one resource.

According to an embodiment of the present disclosure, a first device for performing wireless communication may be proposed. For example, the first device may comprise: at least one transceiver; at least one processor; and at least one memory operably connected to the at least one processor and storing instructions that, based on being executed by the at least one processor, cause the first device to perform operations. For example, the operations may comprise: performing a plurality of physical sidelink shared channel, PSSCH, receptions based on a plurality of PSSCH resources, from a plurality of devices; determining a plurality of physical sidelink feedback channel, PSFCH, resources, for performing a plurality of PSFCH transmissions related to the plurality of PSSCH reception, based on the plurality of PSSCH resource; determining N PSFCH transmissions to be transmitted on at least one resource among the plurality of PSFCH transmissions, that is included in a first PSFCH transmission occasion among the plurality of PSFCH resources; and performing the N PSFCH transmissions based on, a first spatial setting for a smallest value among at least one priority values related to the N PSFCH transmissions, and the at least one resource.

According to an embodiment of the present disclosure, a device adapted to control a first user equipment, UE, may be proposed. For example, the device may comprise: at least one processor; and at least one memory operably connected to the at least one processor and storing instructions that, based on being executed by the at least one processor, cause the first UE to perform operations. For example, the operations may comprise: performing a plurality of physical sidelink shared channel, PSSCH, receptions based on a plurality of PSSCH resources, from a plurality of UEs; determining a plurality of physical sidelink feedback channel, PSFCH, resources, for performing a plurality of PSFCH transmissions related to the plurality of PSSCH reception, based on the plurality of PSSCH resource; determining N PSFCH transmissions to be transmitted on at least one resource among the plurality of PSFCH transmissions, that is included in a first PSFCH transmission occasion among the plurality of PSFCH resources; and performing the N PSFCH transmissions based on, a first spatial setting for a smallest value among at least one priority values related to the N PSFCH transmissions, and the at least one resource.

According to an embodiment of the present disclosure, a non-transitory computer-readable storage medium storing instructions may be proposed. For example, the instructions, based on being executed, may cause a first device to: perform a plurality of physical sidelink shared channel, PSSCH, receptions based on a plurality of PSSCH resources, from a plurality of devices; determine a plurality of physical sidelink feedback channel, PSFCH, resources, for performing a plurality of PSFCH transmissions related to the plurality of PSSCH reception, based on the plurality of PSSCH resource; determine N PSFCH transmissions to be transmitted on at least one resource among the plurality of PSFCH transmissions, that is included in a first PSFCH transmission occasion among the plurality of PSFCH resources; and perform the N PSFCH transmissions based on, a first spatial setting for a smallest value among at least one priority values related to the N PSFCH transmissions, and the at least one resource.

According to an embodiment of the present disclosure, a method for performing, by a second device, wireless communication may be proposed. For example, the method may comprise: transmitting, to a first device, sidelink control information, SCI, for scheduling of a physical sidelink shared channel, PSSCH, transmission through a physical sidelink control channel, PSCCH; performing the PSSCH transmission to the first device, based on a first device; and performing a first PSFCH reception from the first device, based on a physical sidelink feedback channel, PSFCH, resource determined based on the first resource, wherein the first PSFCH reception may be a reception for a first PSFCH transmission included in N PSFCH transmissions transmitted by the first device, wherein the first PSFCH transmission may be performed based on a first spatial setting, and wherein the first spatial setting may be a spatial setting for a smallest value among at least one priority value related to the N PSFCH transmission.

According to an embodiment of the present disclosure, a second device for performing wireless communication may be proposed. For example, the second device may comprise: at least one transceiver; at least one processor; and at least one memory operably connected to the at least one processor and storing instructions that, based on being executed by the at least one processor, cause the second device to perform operations. For example, the operations may comprise: transmitting, to a first device, sidelink control information, SCI, for scheduling of a physical sidelink shared channel, PSSCH, transmission through a physical sidelink control channel, PSCCH; performing the PSSCH transmission to the first device, based on a first device; and performing a first PSFCH reception from the first device, based on a physical sidelink feedback channel, PSFCH, resource determined based on the first resource, wherein the first PSFCH reception may be a reception for a first PSFCH transmission included in N PSFCH transmissions transmitted by the first device, wherein the first PSFCH transmission may be performed based on a first spatial setting, and wherein the first spatial setting may be a spatial setting for a smallest value among at least one priority value related to the N PSFCH transmission.

### BRIEF DESCRIPTION OF THE DRAWINGS

FIG. 1 shows a communication structure that can be provided in a 6G system, according to one embodiment of the present disclosure.
FIG. 2 shows an electromagnetic spectrum, according to one embodiment of the present disclosure.
FIG. 3 shows a structure of an NR system, based on an embodiment of the present disclosure.
FIG. 4 shows a radio protocol architecture, based on an embodiment of the present disclosure.
FIG. 5 shows a structure of a radio frame of an NR, based on an embodiment of the present disclosure.
FIG. 6 shows a structure of a slot of an NR frame, based on an embodiment of the present disclosure.
FIG. 7 shows an example of a BWP, based on an embodiment of the present disclosure.
FIG. 8 shows a procedure of performing V2X or SL communication by a UE based on a transmission mode, based on an embodiment of the present disclosure.
FIG. 9 shows three cast types, based on an embodiment of the present disclosure.
FIG. 10 shows an operation in which a PSCCH/PSSCH receiving UE performs simultaneous PSFCH transmission based on spatial settings according to an embodiment of the present disclosure.
FIG. 11 shows an operation in which a PSCCH/PSSCH receiving UE performs simultaneous PSFCH transmission based on a spatial setting according to an embodiment of the present disclosure.
FIG. 12 shows a procedure for a first device to perform wireless communication, according to one embodiment of the present disclosure.
FIG. 13 shows a procedure for a second device to perform wireless communication, according to one embodiment of the present disclosure.
FIG. 14 shows a communication system 1, based on an embodiment of the present disclosure.
FIG. 15 shows wireless devices, based on an embodiment of the present disclosure.
FIG. 16 shows a signal process circuit for a transmission signal, based on an embodiment of the present disclosure.
FIG. 17 shows another example of a wireless device, based on an embodiment of the present disclosure.
FIG. 18 shows a hand-held device, based on an embodiment of the present disclosure.
FIG. 19 shows a vehicle or an autonomous vehicle, based on an embodiment of the present disclosure.

### MODE FOR INVENTION

In the present disclosure, "A or B" may mean "only A", "only B" or "both A and B." In other words, in the present disclosure, "A or B" may be interpreted as "A and/or B". For example, in the present disclosure, "A, B, or C" may mean "only A", "only B", "only C", or "any combination of A, B, C".

A slash (/) or comma used in the present disclosure may mean "and/or". For example, "A/B" may mean "A and/or B". Accordingly, "A/B" may mean "only A", "only B", or "both A and B". For example, "A, B, C" may mean "A, B, or C".

In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, in the present disclosure, "at least one of A, B, and C" may mean "only A", "only B", "only C", or "any combination of A, B, and C". In addition, "at least one of A, B, or C" or "at least one of A, B, and/or C" may mean "at least one of A, B, and C".

In addition, a parenthesis used in the present disclosure may mean "for example". Specifically, when indicated as "control information (PDCCH)", it may mean that "PDCCH" is proposed as an example of the "control information". In other words, the "control information" of the present disclosure is not limited to "PDCCH", and "PDCCH" may be proposed as an example of the "control information". In addition, when indicated as "control information (i.e., PDCCH)", it may also mean that "PDCCH" is proposed as an example of the "control information".

In the following description, 'when, if, or in case of' may be replaced with 'based on'.

A technical feature described individually in one figure in the present disclosure may be individually implemented, or may be simultaneously implemented.

In the present disclosure, a higher layer parameter may be a parameter which is configured, pre-configured or predefined for a UE. For example, a base station or a network may transmit the higher layer parameter to the UE. For example, the higher layer parameter may be transmitted through radio resource control (RRC) signaling or medium access control (MAC) signaling.

The technology described below may be used in various wireless communication systems such as code division multiple access (CDMA), frequency division multiple access (FDMA), time division multiple access (TDMA), orthogonal frequency division multiple access (OFDMA), single carrier frequency division multiple access (SC-FDMA), and so on. The CDMA may be implemented with a radio technology, such as universal terrestrial radio access (UTRA) or CDMA-2000. The TDMA may be implemented with a radio technology, such as global system for mobile communications (GSM)/general packet ratio service (GPRS)/enhanced data rate for GSM evolution (EDGE). The OFDMA may be implemented with a radio technology, such as institute of electrical and electronics engineers (IEEE) 802.11 (Wi-Fi), IEEE 802.16 (WiMAX), IEEE 802.20, evolved UTRA (E-UTRA), and so on. IEEE 802.16m is an evolved version of IEEE 802.16e and provides backward compatibility with a system based on the IEEE 802.16e. The UTRA is part of a universal mobile telecommunication system (UMTS). 3rd generation partnership project (3GPP) long term evolution (LTE) is part of an evolved UMTS (E-UMTS) using the E-UTRA. The 3GPP LTE uses the OFDMA in a downlink and uses the SC-FDMA in an uplink. LTE-advanced (LTE-A) is an evolution of the LTE.

5G NR is a successive technology of LTE-A corresponding to a new Clean-slate type mobile communication system having the characteristics of high performance, low latency, high availability, and so on. 5G NR may use resources of all spectrum available for usage including low frequency bands of less than 1GHz, middle frequency bands ranging from 1GHz to 10GHz, high frequency (millimeter waves) of 24GHz or more, and so on.

The 6G (wireless communication) system is aimed at (i) very high data rates per device, (ii) a very large number of connected devices, (iii) global connectivity, (iv) very low latency, (v) lower energy consumption for battery-free IoT devices, (vi) ultra-reliable connectivity, and (vii) connected intelligence with a machine learning capability. The vision of the 6G system can be in four aspects: intelligent connectivity, deep connectivity, holographic connectivity, and ubiquitous connectivity, and the 6G system may satisfy the requirements as shown in Table 1 below. In other words, Table 1 is an example of the requirements of the 6G system.

**[Table 1]**

| | |
|---|---|
| Per device peak data rate | 1 Tbps |
| E2E latency | 1 ms |
| Maximum spectral efficiency | 100bps/Hz |
| Mobility support | Up to 1000km/hr |
| Satellite integration | Fully |
| AI | Fully |
| Autonomous vehicle | Fully |
| XR | Fully |
| Haptic Communication | Fully |

6G system may have key factors such as eMBB(Enhanced mobile broadband), URLLC(Ultra-reliable low latency communications), mMTC(massive machine-type communication), AI integrated communication, Tactile internet, High throughput, High network capacity, High energy efficiency, Low backhaul and access network congestion, Enhanced data security.

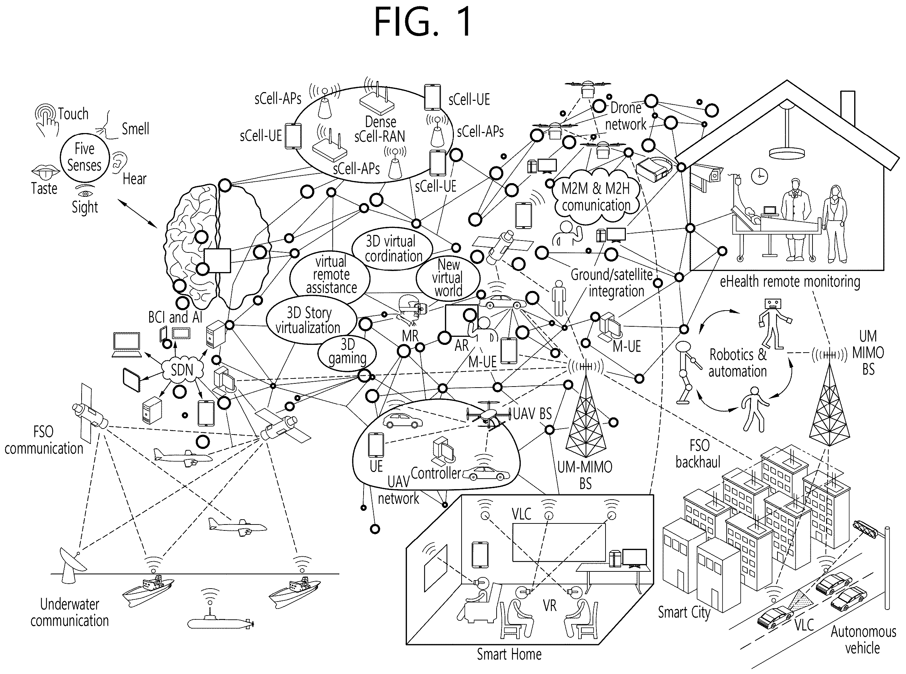

FIG. 1 shows a communication structure that can be provided in a 6G system, according to one embodiment of the present disclosure. The embodiment of FIG. 1 may be combined with various embodiments of the present disclosure.

6G systems are expected to have 50 times higher simultaneous radio connectivity than 5G radio systems. URLLC, a key feature of 5G, will become a more dominant technology in 6G communications by providing end-to-end delay of less than 1 ms. In 6G systems, volumetric spectral efficiency will be much better, as opposed to the area spectral efficiency often used today. 6G systems will be able to offer very long battery life and advanced battery technologies for energy harvesting, so mobile devices will not need to be recharged separately in 6G systems. In 6G, new network characteristics may be as follows.
- Satellites integrated network: To provide a global mobile population, 6G is expected to be integrated with satellite. The integration of terrestrial, satellite, and airborne networks into a single wireless communication system is important for 6G.
- Connected intelligence: Unlike previous generations of wireless communication systems, 6G is revolutionary and the wireless evolution will be updated from "connected things" to "connected intelligence". AI can be applied at each step of the communication procedure (or each step of signal processing, as will be described later).
- Seamless integration wireless information and energy transfer: 6G wireless networks will deliver power to charge batteries of devices such as smartphones and sensors. Therefore, wireless information and energy transfer (WIET) will be integrated.
- Ubiquitous super 3D connectivity: Super 3D connection will be generated from 6G ubiquity to access networks and core network functions on drones and very low Earth orbit satellites.

Given the above new network characteristics of 6G, some common requirements may be as follows
- small cell networks: The idea of small cell networks was introduced in cellular systems to improve received signal quality as a result of improved processing throughput, energy efficiency, and spectral efficiency. As a result, small cell networks are an essential characteristic for communication systems over 5G and beyond 5G (5GB). Therefore, 6G communication systems will also adopt the characteristics of small cell networks.
- Ultra-dense heterogeneous network: Ultra-dense heterogeneous networks will be another important characteristic of 6G communication systems. Multi-tier networks composed of heterogeneous networks will improve overall QoS and reduce costs.
- High-capacity backhaul: Backhaul connection is characterized by high-capacity backhaul networks to support large volumes of traffic. High-speed fiber optics and free-space optics (FSO) systems may be a possible solution to this problem.
- Radar technology integrated with mobile technology: High-precision localization (or location-based services) through communication is one of the features of 6G wireless communication systems. Therefore, radar systems will be integrated with 6G networks.
- Softwarization and virtualization: Softwareization and virtualization are two important features that are fundamental to the design process in a 5GB network to ensure flexibility, reconfigurability, and programmability. In addition, billions of devices may be shared on a shared physical infrastructure.

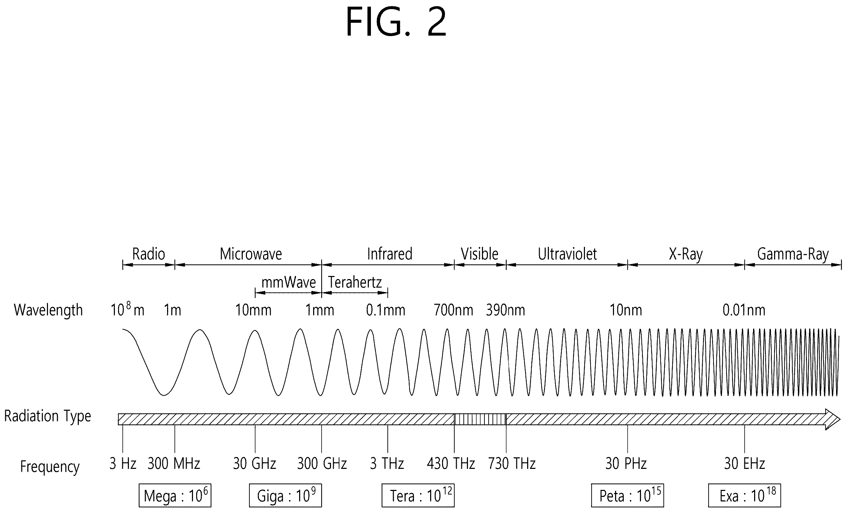

The following describes the core implementation technologies for 6G systems.
- Artificial Intelligence: The most important and new technology that will be introduced in the 6G system is AI. The 4G system did not involve AI. 5G systems will support partial or very limited AI. However, 6G systems will be fully AI-enabled for automation. Advances in machine learning will create more intelligent networks for real-time communication in 6G. The introduction of AI in telecommunications may streamline and improve real-time data transmission. AI may use numerous analytics to determine the way complex target operations are performed, which means AI can increase efficiency and reduce processing delays. Time-consuming tasks such as handover, network selection, and resource scheduling can be done instantly by using AI. AI may also play an important role in M2M, machine-to-human, and human-to-machine communications. In addition, AI may become a rapid communication in Brain Computer Interface (BCI). AI-based communication systems can be supported by metamaterials, intelligent structures, intelligent networks, intelligent devices, intelligent cognitive radios, self-sustaining wireless networks, and machine learning.
- THz Communication (Terahertz Communication): Data rates can be increased by increasing bandwidth. This can be accomplished by using sub-THz communication with a wide bandwidth and applying advanced massive MIMO technology. THz waves, also known as sub-millimeter radiation, refer to frequency bands between 0.1 and 10 THz with corresponding wavelengths typically ranging from 0.03 mm-3 mm. The 100 GHz-300 GHz band range (Sub THz band) is considered the main part of the THz band for cellular communications. Adding the Sub-THz band to the mmWave band increases the capacity of 6G cellular communications. 300 GHz-3 THz in the defined THz band is in the far infrared (IR) frequency band. The 300 GHz-3 THz band is part of the optical band, but it is on the border of the optical band, just behind the RF band. Thus, the 300 GHz-3 THz band exhibits similarities to RF. FIG. 2 shows an electromagnetic spectrum, according to one embodiment of the present disclosure. The embodiment of FIG. 2 may be combined with various embodiments of the present disclosure. Key characteristics of THz communications include (i) widely available bandwidth to support very high data rates, and (ii) high path loss at high frequencies (for which highly directive antennas are indispensable). The narrow beamwidth produced by highly directive antennas reduces interference. The small wavelength of THz signals allows a much larger number of antenna elements to be integrated into devices and BSs operating in this band. This enables the use of advanced adaptive array techniques that can overcome range limitations.
- Large-scale MIMO
- HBF, Hologram Bmeaforming
- Optical wireless technology
- FSO Backhaul Network
- Non-Terrestrial Networks, NTN
- Quantum Communication
- Cell-free Communication
- Integration of Wireless Information and Power Transmission
- Integration of Wireless Communication and Sensing
- Integrated Access and Backhaul Network
- Big data Analysis
- Reconfigurable Intelligent Surface
- Metaverse
- Block-chain
- UAV, Unmanned Aerial Vehicle: Unmanned aerial vehicles (UAVs), or drones, will be an important component of 6G wireless communications. In most cases, high-speed data wireless connection is provided using UAV technology. A BS entity is installed on a UAV to provide cellular connection. UAVs have specific features not found in fixed BS infrastructure, such as easy deployment, strong line-of-sight links, and freedom of controlled mobility. During emergencies, such as natural disasters, the deployment of terrestrial communication infrastructure is not economically feasible and sometimes cannot provide services in volatile environments. UAVs can easily handle these situations. UAVs will be a new paradigm in wireless communications. This technology facilitates three basic requirements of wireless networks: eMBB, URLLC, and mMTC. UAVs can also support many other purposes such as enhancing network connectivity, fire detection, disaster emergency services, security and surveillance, pollution monitoring, parking monitoring, accident monitoring, etc. Therefore, UAV technology is recognized as one of the most important technologies for 6G communications.
- Autonomous Driving, Self-driving: For perfect autonomous driving, vehicles must communicate with each other to inform each other of dangerous situations, or with infrastructure such as parking lots and traffic lights to check information such as the location of parking information and signal change times. Vehicle to Everything (V2X), a key element in building an autonomous driving infrastructure, is a technology that allows vehicles to communicate and share information with various elements on the road, in order to perform autonomous driving, such as vehicle-to-vehicle (V2V) wireless communication and vehicle-to-infrastructure (V2I) wireless communication. In order to maximize the performance of autonomous driving and ensure high safety, fast transmission speeds and low latency technologies are essential. In addition, in the future, autonomous driving will go beyond delivering warnings or guidance messages to a driver to actively intervene in vehicle operation and directly control the vehicle in dangerous situations, so the amount of information that needs to be transmitted and received will be vast, and 6G is expected to maximize autonomous driving with faster transmission speeds and lower latency than 5G.

For the sake of clarity, the description focuses on 5G NR, but the technical ideas of one embodiment of the present disclosure are not limited thereto. Various embodiments of the present disclosure may also be applicable to 6G communication systems.

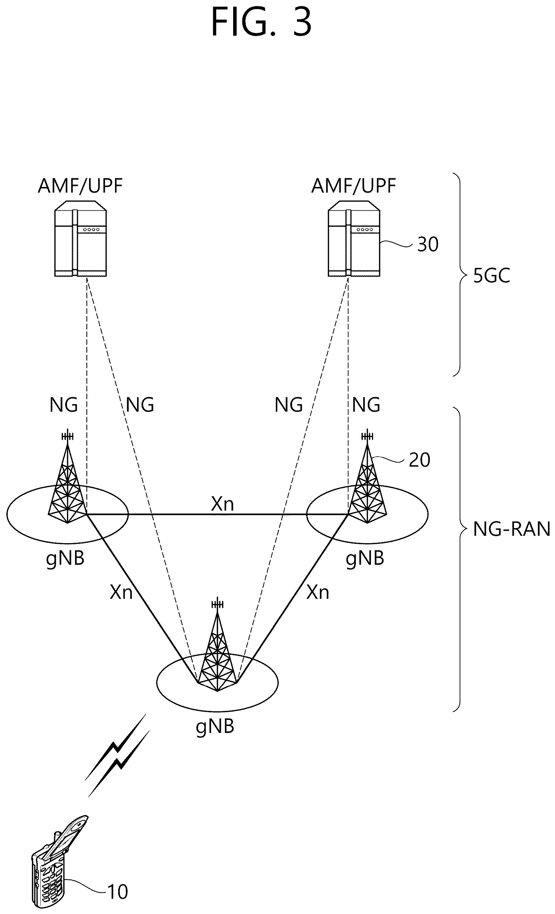

FIG. 3 shows a structure of an NR system, based on an embodiment of the present disclosure. The embodiment of FIG. 3 may be combined with various embodiments of the present disclosure.

Referring to FIG. 3, a next generation-radio access network (NG-RAN) may include a BS 20 providing a UE 10 with a user plane and control plane protocol termination. For example, the BS 20 may include a next generation-Node B (gNB) and/or an evolved-NodeB (eNB). For example, the UE 10 may be fixed or mobile and may be referred to as other terms, such as a mobile station (MS), a user terminal (UT), a subscriber station (SS), a mobile terminal (MT), wireless device, and so on. For example, the BS may be referred to as a fixed station which communicates with the UE 10 and may be referred to as other terms, such as a base transceiver system (BTS), an access point (AP), and so on.

The embodiment of FIG. 3 exemplifies a case where only the gNB is included. The BSs 20 may be connected to one another via Xn interface. The BS 20 may be connected to one another via 5th generation (5G) core network (5GC) and NG interface. More specifically, the BSs 20 may be connected to an access and mobility management function (AMF) 30 via NG-C interface, and may be connected to a user plane function (UPF) 30 via NG-U interface.

Layers of a radio interface protocol between the UE and the network can be classified into a first layer (layer 1, L1), a second layer (layer 2, L2), and a third layer (layer 3, L3) based on the lower three layers of the open system interconnection (OSI) model that is well-known in the communication system. Among them, a physical (PHY) layer belonging to the first layer provides an information transfer service by using a physical channel, and a radio resource control (RRC) layer belonging to the third layer serves to control a radio resource between the UE and the network. For this, the RRC layer exchanges an RRC message between the UE and the BS.

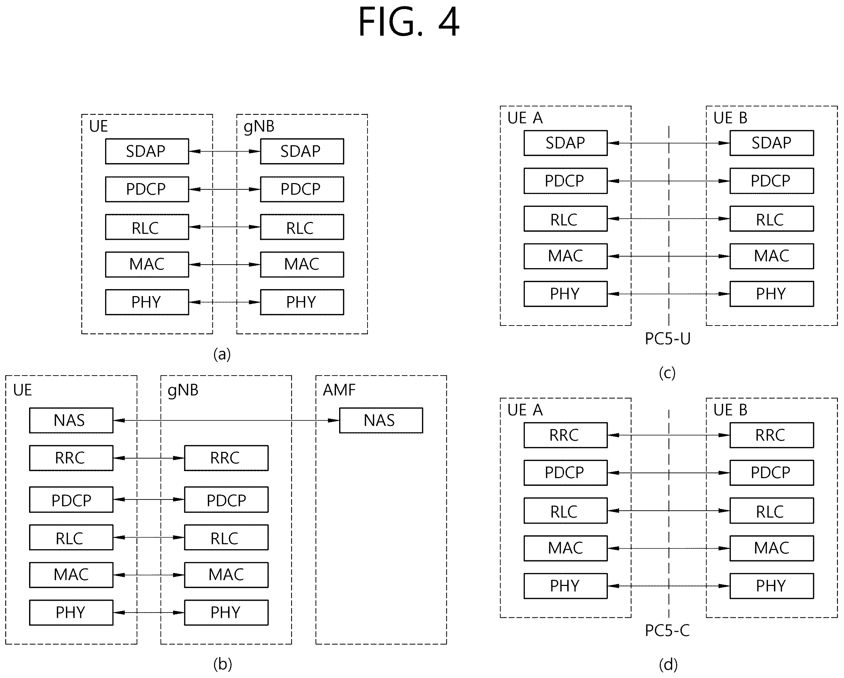

FIG. 4 shows a radio protocol architecture, based on an embodiment of the present disclosure. The embodiment of FIG. 4 may be combined with various embodiments of the present disclosure. Specifically, (a) of FIG. 4 shows a radio protocol stack of a user plane for Uu communication, and (b) of FIG. 4 shows a radio protocol stack of a control plane for Uu communication. (c) of FIG. 4 shows a radio protocol stack of a user plane for SL communication, and (d) of FIG. 4 shows a radio protocol stack of a control plane for SL communication.

Referring to FIG. 4, a physical layer provides an upper layer with an information transfer service through a physical channel. The physical layer is connected to a medium access control (MAC) layer which is an upper layer of the physical layer through a transport channel. Data is transferred between the MAC layer and the physical layer through the transport channel. The transport channel is classified according to how and with what characteristics data is transmitted through a radio interface.

Between different physical layers, i.e., a physical layer of a transmitter and a physical layer of a receiver, data are transferred through the physical channel. The physical channel is modulated using an orthogonal frequency division multiplexing (OFDM) scheme, and utilizes time and frequency as a radio resource.

The MAC layer provides services to a radio link control (RLC) layer, which is a higher layer of the MAC layer, via a logical channel. The MAC layer provides a function of mapping multiple logical channels to multiple transport channels. The MAC layer also provides a function of logical channel multiplexing by mapping multiple logical channels to a single transport channel. The MAC layer provides data transfer services over logical channels.

The RLC layer performs concatenation, segmentation, and reassembly of Radio Link Control Service Data Unit (RLC SDU). In order to ensure diverse quality of service (QoS) required by a radio bearer (RB), the RLC layer provides three types of operation modes, i.e., a transparent mode (TM), an unacknowledged mode (UM), and an acknowledged mode (AM). An AM RLC provides error correction through an automatic repeat request (ARQ).

A radio resource control (RRC) layer is defined only in the control plane. The RRC layer serves to control the logical channel, the transport channel, and the physical channel in association with configuration, reconfiguration and release of RBs. The RB is a logical path provided by the first layer (i.e., the physical layer or the PHY layer) and the second layer (i.e., a MAC layer, an RLC layer, a packet data convergence protocol (PDCP) layer, and a service data adaptation protocol (SDAP) layer) for data delivery between the UE and the network.

Functions of a packet data convergence protocol (PDCP) layer in the user plane include user data delivery, header compression, and ciphering. Functions of a PDCP layer in the control plane include control-plane data delivery and ciphering/integrity protection.

A service data adaptation protocol (SDAP) layer is defined only in a user plane. The SDAP layer performs mapping between a Quality of Service (QoS) flow and a data radio bearer (DRB) and QoS flow ID (QFI) marking in both DL and UL packets.

The configuration of the RB implies a process for specifying a radio protocol layer and channel properties to provide a particular service and for determining respective detailed parameters and operations. The RB can be classified into two types, i.e., a signaling RB (SRB) and a data RB (DRB). The SRB is used as a path for transmitting an RRC message in the control plane. The DRB is used as a path for transmitting user data in the user plane.

When an RRC connection is established between an RRC layer of the UE and an RRC layer of the E-UTRAN, the UE is in an RRC_CONNECTED state, and, otherwise, the UE may be in an RRC_IDLE state. In case of the NR, an RRC_INACTIVE state is additionally defined, and a UE being in the RRC_INACTIVE state may maintain its connection with a core network whereas its connection with the BS is released.

Data is transmitted from the network to the UE through a downlink transport channel. Examples of the downlink transport channel include a broadcast channel (BCH) for transmitting system information and a downlink-shared channel (SCH) for transmitting user traffic or control messages. Traffic of downlink multicast or broadcast services or the control messages can be transmitted on the downlink-SCH or an additional downlink multicast channel (MCH). Data is transmitted from the UE to the network through an uplink transport channel. Examples of the uplink transport channel include a random access channel (RACH) for transmitting an initial control message and an uplink SCH for transmitting user traffic or control messages.

Examples of logical channels belonging to a higher channel of the transport channel and mapped onto the transport channels include a broadcast channel (BCCH), a paging control channel (PCCH), a common control channel (CCCH), a multicast control channel (MCCH), a multicast traffic channel (MTCH), etc.

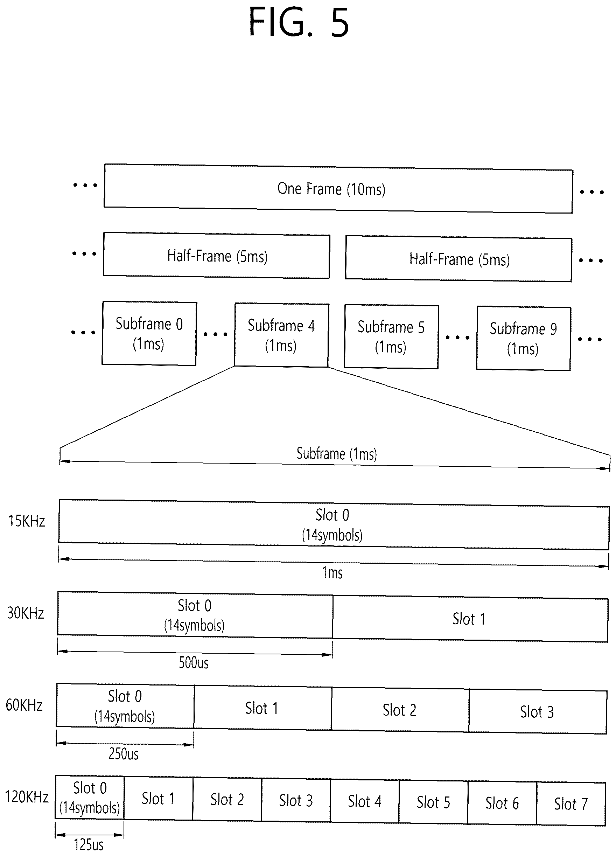

FIG. 5 shows a structure of a radio frame of an NR, based on an embodiment of the present disclosure. The embodiment of FIG. 5 may be combined with various embodiments of the present disclosure.

Referring to FIG. 5, in the NR, a radio frame may be used for performing uplink and downlink transmission. A radio frame has a length of 10ms and may be defined to be configured of two half-frames (HFs). A half-frame may include five 1ms subframes (SFs). A subframe (SF) may be spread into one or more slots, and the number of slots within a subframe may be determined based on subcarrier spacing (SCS). Each slot may include 12 or 14 OFDM(A) symbols according to a cyclic prefix (CP).

In case of using a normal CP, each slot may include 14 symbols. In case of using an extended CP, each slot may include 12 symbols. Herein, a symbol may include an OFDM symbol (or CP-OFDM symbol) and a Single Carrier-FDMA (SC-FDMA) symbol (or Discrete Fourier Transform-spread-OFDM (DFT-s-OFDM) symbol).

The following Table 2 shows the number of symbols per slot (N^{slot}_{symb}), number of slots per frame (N^{frame,u}ₛₗₒₜ), and number of slots per subframe (N^{subframe,u}ₛₗₒₜ), depending on the SCS configuration (u), when Normal CP or Extended CP is used.

**[Table 2]**

| CP type | SCS (15*2^{u}) | N^{slot}_{symb} | N^{frame,u}ₛₗₒₜ | N^{subframe,u}ₛₗₒₜ |
|---|---|---|---|---|
| normal CP | 15kHz (u=0) | 14 | 10 | 1 |
| | 30kHz (u=1) | 14 | 20 | 2 |
| | 60kHz (u=2) | 14 | 40 | 4 |
| | 120kHz (u=3) | 14 | 80 | 8 |
| | 240kHz (u=4) | 14 | 160 | 16 |
| extended CP | 60kHz (u=2) | 12 | 40 | 4 |

In an NR system, OFDM(A) numerologies (e.g., SCS, CP length, and so on) between multiple cells being integrate to one UE may be differently configured. Accordingly, a (absolute time) duration (or section) of a time resource (e.g., subframe, slot or TTI) (collectively referred to as a time unit (TU) for simplicity) being configured of the same number of symbols may be differently configured in the integrated cells.

In the NR, multiple numerologies or SCSs for supporting diverse 5G services may be supported. For example, in case an SCS is 15kHz, a wide area of the conventional cellular bands may be supported, and, in case an SCS is 30kHz/60kHz a dense-urban, lower latency, wider carrier bandwidth may be supported. In case the SCS is 60kHz or higher, a bandwidth that is greater than 24.25GHz may be used in order to overcome phase noise.

An NR frequency band may be defined as two different types of frequency ranges. The two different types of frequency ranges may be FR1 and FR2. The values of the frequency ranges may be changed (or varied), and, for example, the two different types of frequency ranges may be as shown below in Table 3. Among the frequency ranges that are used in an NR system, FR1 may mean a "sub 6GHz range", and FR2 may mean an "above 6GHz range" and may also be referred to as a millimeter wave (mmW).

**[Table 3]**

| Frequency Range designation | Corresponding frequency range | Subcarrier Spacing (SCS) |
|---|---|---|
| FR1 | 450MHz - 6000MHz | 15, 30, 60kHz |
| FR2 | 24250MHz - 52600MHz | 60, 120, 240kHz |

As described above, the values of the frequency ranges in the NR system may be changed (or varied). For example, as shown below in Table 4, FR1 may include a band within a range of 410MHz to 7125MHz. More specifically, FR1 may include a frequency band of 6GHz (or 5850, 5900, 5925 MHz, and so on) and higher. For example, a frequency band of 6GHz (or 5850, 5900, 5925 MHz, and so on) and higher being included in FR1 mat include an unlicensed band. The unlicensed band may be used for diverse purposes, e.g., the unlicensed band for vehicle-specific communication (e.g., automated driving).

**[Table 4]**

| Frequency Range designation | Corresponding frequency range | Subcarrier Spacing (SCS) |
|---|---|---|
| FR1 | 410MHz - 7125MHz | 15, 30, 60kHz |
| FR2 | 24250MHz - 52600MHz | 60, 120, 240kHz |

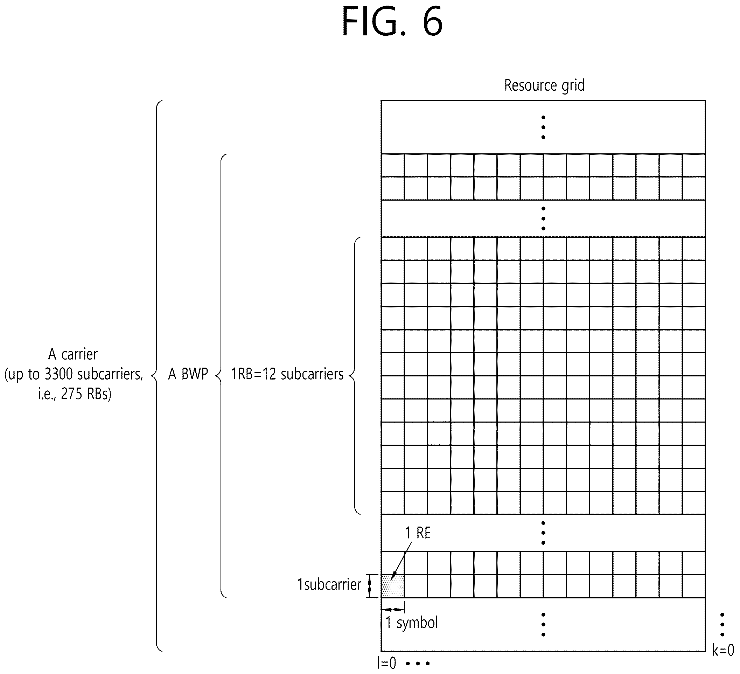

FIG. 6 shows a structure of a slot of an NR frame, based on an embodiment of the present disclosure. The embodiment of FIG. 6 may be combined with various embodiments of the present disclosure.

Referring to FIG. 6, a slot includes a plurality of symbols in a time domain. For example, in case of a normal CP, one slot may include 14 symbols. However, in case of an extended CP, one slot may include 12 symbols. Alternatively, in case of a normal CP, one slot may include 7 symbols. However, in case of an extended CP, one slot may include 6 symbols. A carrier includes a plurality of subcarriers in a frequency domain. A Resource Block (RB) may be defined as a plurality of consecutive subcarriers (e.g., 12 subcarriers) in the frequency domain. A Bandwidth Part (BWP) may be defined as a plurality of consecutive (Physical) Resource Blocks ((P)RBs) in the frequency domain, and the BWP may correspond to one numerology (e.g., SCS, CP length, and so on).

A carrier may include a maximum of N number BWPs (e.g., 5 BWPs). Data communication may be performed via an activated BWP. Each element may be referred to as a Resource Element (RE) within a resource grid and one complex symbol may be mapped to each element.

Hereinafter, a bandwidth part (BWP) and a carrier will be described.

The BWP may be a set of consecutive physical resource blocks (PRBs) in a given numerology. The PRB may be selected from consecutive sub-sets of common resource blocks (CRBs) for the given numerology on a given carrier

For example, the BWP may be at least any one of an active BWP, an initial BWP, and/or a default BWP. For example, the UE may not monitor downlink radio link quality in a DL BWP other than an active DL BWP on a primary cell (PCell). For example, the UE may not receive PDCCH, physical downlink shared channel (PDSCH), or channel state information - reference signal (CSI-RS) (excluding RRM) outside the active DL BWP. For example, the UE may not trigger a channel state information (CSI) report for the inactive DL BWP. For example, the UE may not transmit physical uplink control channel (PUCCH) or physical uplink shared channel (PUSCH) outside an active UL BWP. For example, in a downlink case, the initial BWP may be given as a consecutive RB set for a remaining minimum system information (RMSI) control resource set (CORESET) (configured by physical broadcast channel (PBCH)). For example, in an uplink case, the initial BWP may be given by system information block (SIB) for a random access procedure. For example, the default BWP may be configured by a higher layer. For example, an initial value of the default BWP may be an initial DL BWP. For energy saving, if the UE fails to detect downlink control information (DCI) during a specific period, the UE may switch the active BWP of the UE to the default BWP.

Meanwhile, the BWP may be defined for SL. The same SL BWP may be used in transmission and reception. For example, a transmitting UE may transmit an SL channel or an SL signal on a specific BWP, and a receiving UE may receive the SL channel or the SL signal on the specific BWP. In a licensed carrier, the SL BWP may be defined separately from a Uu BWP, and the SL BWP may have configuration signaling separate from the Uu BWP. For example, the UE may receive a configuration for the SL BWP from the BS/network. For example, the UE may receive a configuration for the Uu BWP from the BS/network. The SL BWP may be (pre-)configured in a carrier with respect to an out-of-coverage NR V2X UE and an RRC_IDLE UE. For the UE in the RRC_CONNECTED mode, at least one SL BWP may be activated in the carrier.

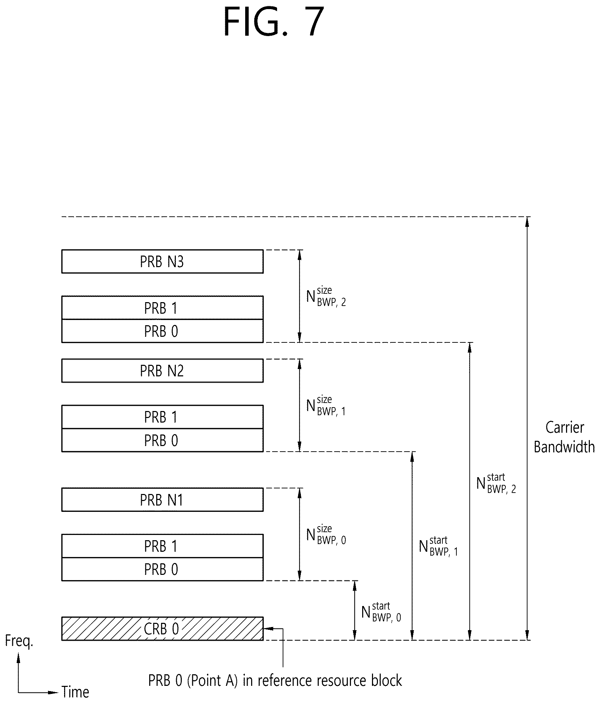

FIG. 7 shows an example of a BWP, based on an embodiment of the present disclosure. The embodiment of FIG. 7 may be combined with various embodiments of the present disclosure. It is assumed in the embodiment of FIG. 7 that the number of BWPs is 3.

Referring to FIG. 7, a common resource block (CRB) may be a carrier resource block numbered from one end of a carrier band to the other end thereof. In addition, the PRB may be a resource block numbered within each BWP. A point A may indicate a common reference point for a resource block grid.

The BWP may be configured by a point A, an offset N^{start}_{BWP} from the point A, and a bandwidth N^{size}_{BWP}. For example, the point A may be an external reference point of a PRB of a carrier in which a subcarrier 0 of all numerologies (e.g., all numerologies supported by a network on that carrier) is aligned. For example, the offset may be a PRB interval between a lowest subcarrier and the point A in a given numerology. For example, the bandwidth may be the number of PRBs in the given numerology.

Hereinafter, V2X or SL communication will be described.

A sidelink synchronization signal (SLSS) may include a primary sidelink synchronization signal (PSSS) and a secondary sidelink synchronization signal (SSSS), as an SL-specific sequence. The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, a UE may use the S-PSS for initial signal detection and for synchronization acquisition. For example, the UE may use the S-PSS and the S-SSS for acquisition of detailed synchronization and for detection of a synchronization signal ID.

A physical sidelink broadcast channel (PSBCH) may be a (broadcast) channel for transmitting default (system) information which must be first known by the UE before SL signal transmission/reception. For example, the default information may be information related to SLSS, a duplex mode (DM), a time division duplex (TDD) uplink/downlink (UL/DL) configuration, information related to a resource pool, a type of an application related to the SLSS, a subframe offset, broadcast information, or the like. For example, for evaluation of PSBCH performance, in NR V2X, a payload size of the PSBCH may be 56 bits including 24-bit cyclic redundancy check (CRC).

The S-PSS, the S-SSS, and the PSBCH may be included in a block format (e.g., SL synchronization signal (SS)/PSBCH block, hereinafter, sidelink-synchronization signal block (S-SSB)) supporting periodical transmission. The S-SSB may have the same numerology (i.e., SCS and CP length) as a physical sidelink control channel (PSCCH)/physical sidelink shared channel (PSSCH) in a carrier, and a transmission bandwidth may exist within a (pre-)configured sidelink (SL) BWP. For example, the S-SSB may have a bandwidth of 11 resource blocks (RBs). For example, the PSBCH may exist across 11 RBs. In addition, a frequency position of the S-SSB may be (pre-)configured. Accordingly, the UE does not have to perform hypothesis detection at frequency to discover the S-SSB in the carrier.

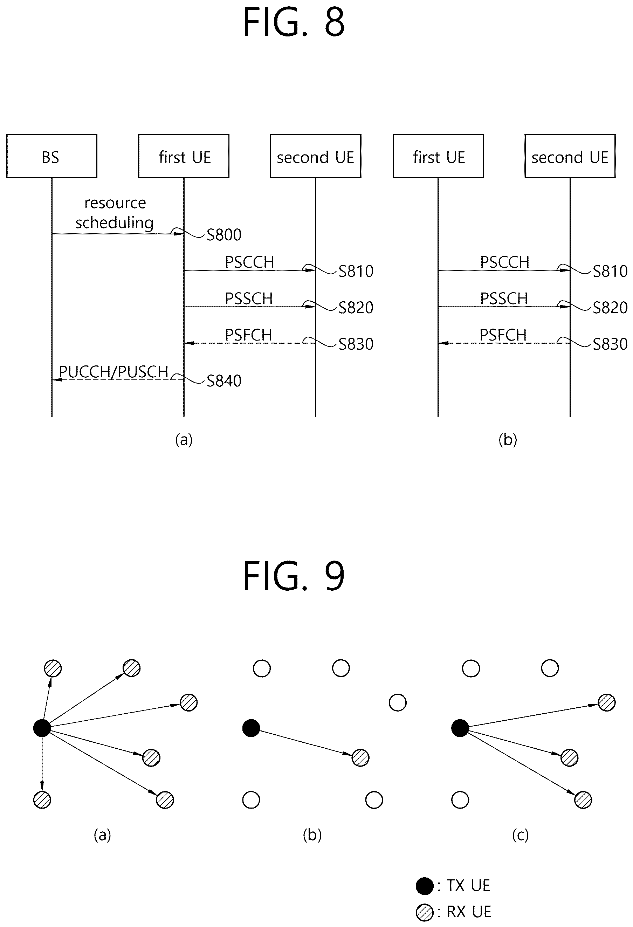

FIG. 8 shows a procedure of performing V2X or SL communication by a UE based on a transmission mode, based on an embodiment of the present disclosure. The embodiment of FIG. 8 may be combined with various embodiments of the present disclosure. In various embodiments of the present disclosure, the transmission mode may be called a mode or a resource allocation mode. Hereinafter, for convenience of explanation, in LTE, the transmission mode may be called an LTE transmission mode. In NR, the transmission mode may be called an NR resource allocation mode.

For example, (a) of FIG. 8 shows a UE operation related to an LTE transmission mode 1 or an LTE transmission mode 3. Alternatively, for example, (a) of FIG. 8 shows a UE operation related to an NR resource allocation mode 1. For example, the LTE transmission mode 1 may be applied to general SL communication, and the LTE transmission mode 3 may be applied to V2X communication.

For example, (b) of FIG. 8 shows a UE operation related to an LTE transmission mode 2 or an LTE transmission mode 4. Alternatively, for example, (b) of FIG. 8 shows a UE operation related to an NR resource allocation mode 2.

Referring to (a) of FIG. 8, in the LTE transmission mode 1, the LTE transmission mode 3, or the NR resource allocation mode 1, a base station may schedule SL resource(s) to be used by a UE for SL transmission. For example, in step S800, a base station may transmit information related to SL resource(s) and/or information related to UL resource(s) to a first UE. For example, the UL resource(s) may include PUCCH resource(s) and/or PUSCH resource(s). For example, the UL resource(s) may be resource(s) for reporting SL HARQ feedback to the base station.

For example, the first UE may receive information related to dynamic grant (DG) resource(s) and/or information related to configured grant (CG) resource(s) from the base station. For example, the CG resource(s) may include CG type 1 resource(s) or CG type 2 resource(s). In the present disclosure, the DG resource(s) may be resource(s) configured/allocated by the base station to the first UE through a downlink control information (DCI). In the present disclosure, the CG resource(s) may be (periodic) resource(s) configured/allocated by the base station to the first UE through a DCI and/or an RRC message. For example, in the case of the CG type 1 resource(s), the base station may transmit an RRC message including information related to CG resource(s) to the first UE. For example, in the case of the CG type 2 resource(s), the base station may transmit an RRC message including information related to CG resource(s) to the first UE, and the base station may transmit a DCI related to activation or release of the CG resource(s) to the first UE.

In step S810, the first UE may transmit a PSCCH (e.g., sidelink control information (SCI) or 1st-stage SCI) to a second UE based on the resource scheduling. In step S820, the first UE may transmit a PSSCH (e.g., 2nd-stage SCI, MAC PDU, data, etc.) related to the PSCCH to the second UE. In step S830, the first UE may receive a PSFCH related to the PSCCH/PSSCH from the second UE. For example, HARQ feedback information (e.g., NACK information or ACK information) may be received from the second UE through the PSFCH. In step S840, the first UE may transmit/report HARQ feedback information to the base station through the PUCCH or the PUSCH. For example, the HARQ feedback information reported to the base station may be information generated by the first UE based on the HARQ feedback information received from the second UE. For example, the HARQ feedback information reported to the base station may be information generated by the first UE based on a pre-configured rule. For example, the DCI may be a DCI for SL scheduling. For example, a format of the DCI may be a DCI format 3_0 or a DCI format 3 1.

Referring to (b) of FIG. 8, in the LTE transmission mode 2, the LTE transmission mode 4, or the NR resource allocation mode 2, a UE may determine SL transmission resource(s) within SL resource(s) configured by a base station/network or pre-configured SL resource(s). For example, the configured SL resource(s) or the pre-configured SL resource(s) may be a resource pool. For example, the UE may autonomously select or schedule resource(s) for SL transmission. For example, the UE may perform SL communication by autonomously selecting resource(s) within the configured resource pool. For example, the UE may autonomously select resource(s) within a selection window by performing a sensing procedure and a resource (re)selection procedure. For example, the sensing may be performed in a unit of subchannel(s). For example, in step S810, a first UE which has selected resource(s) from a resource pool by itself may transmit a PSCCH (e.g., sidelink control information (SCI) or 1st-stage SCI) to a second UE by using the resource(s). In step S820, the first UE may transmit a PSSCH (e.g., 2nd-stage SCI, MAC PDU, data, etc.) related to the PSCCH to the second UE. In step S830, the first UE may receive a PSFCH related to the PSCCH/PSSCH from the second UE.

Referring to (a) or (b) of FIG. 8, for example, the first UE may transmit a SCI to the second UE through the PSCCH. Alternatively, for example, the first UE may transmit two consecutive SCIs (e.g., 2-stage SCI) to the second UE through the PSCCH and/or the PSSCH. In this case, the second UE may decode two consecutive SCIs (e.g., 2-stage SCI) to receive the PSSCH from the first UE. In the present disclosure, a SCI transmitted through a PSCCH may be referred to as a 1st SCI, a first SCI, a 1st-stage SCI or a 1st-stage SCI format, and a SCI transmitted through a PSSCH may be referred to as a 2nd SCI, a second SCI, a 2nd-stage SCI or a 2nd-stage SCI format. For example, the 1st-stage SCI format may include a SCI format 1-A, and the 2nd-stage SCI format may include a SCI format 2-A and/or a SCI format 2-B.

Hereinafter, an example of SCI format 1-A will be described.

SCI format 1-A is used for the scheduling of PSSCH and 2nd-stage-SCI on PSSCH.

The following information is transmitted by means of the SCI format 1-A:
- Priority - 3 bits
- Frequency resource assignment - ceiling (log₂(N^{SL}_{subChannel}(N^{SL}_{subChannel}+1)/2)) bits when the value of the higher layer parameter sl-MaxNumPerReserve is configured to 2; otherwise ceiling log₂(N^{SL}_{subChannel}(N^{SL}_{subChannel}+1)(2N^{SL}_{subChannel}+1)/6) bits when the value of the higher layer parameter sl-MaxNumPerReserve is configured to 3
- Time resource assignment - 5 bits when the value of the higher layer parameter sl-MaxNumPerReserve is configured to 2; otherwise 9 bits when the value of the higher layer parameter sl-MaxNumPerReserve is configured to 3
- Resource reservation period - ceiling (log₂ N_{rsv_period}) bits, where N_{rsv_period} is the number of entries in the higher layer parameter sl-ResourceReservePeriodList, if higher layer parameter sl-MultiReserveResource is configured; 0 bit otherwise
- DMRS pattern - ceiling (log₂ Nₚₐₜₜₑᵣₙ) bits, where Nₚₐₜₜₑᵣₙ is the number of DMRS patterns configured by higher layer parameter sl-PSSCH-DMRS-TimePatternList
- 2^{nd}-stage SCI format - 2 bits as defined in Table 5
- Beta_offset indicator - 2 bits as provided by higher layer parameter sl-BetaOffsets2ndSCI
- Number of DMRS port - 1 bit as defined in Table 6
- Modulation and coding scheme - 5 bits
- Additional MCS table indicator - 1 bit if one MCS table is configured by higher layer parameter sl-Additional-MCS-Table; 2 bits if two MCS tables are configured by higher layer parameter sl- Additional-MCS-Table; 0 bit otherwise
- PSFCH overhead indication - 1 bit if higher layer parameter sl-PSFCH-Period = 2 or 4; 0 bit otherwise
- Reserved - a number of bits as determined by higher layer parameter sl-NumReservedBits, with value set to zero.

**[Table 5]**

| Value of 2nd-stage SCI format field | 2nd-stage SCI format |
|---|---|
| 00 | SCI format 2-A |
| 01 | SCI format 2-B |
| 10 | Reserved |
| 11 | Reserved |

**[Table 6]**

| Value of the Number of DMRS port field | Antenna ports |
|---|---|
| 0 | 1000 |
| 1 | 1000 and 1001 |

Hereinafter, an example of SCI format 2-A will be described.

SCI format 2-A is used for the decoding of PSSCH, with HARQ operation when HARQ-ACK information includes ACK or NACK, when HARQ-ACK information includes only NACK, or when there is no feedback of HARQ-ACK information.

The following information is transmitted by means of the SCI format 2-A:
- HARQ process number - 4 bits
- New data indicator - 1 bit
- Redundancy version - 2 bits
- Source ID - 8 bits
- Destination ID - 16 bits
- HARQ feedback enabled/disabled indicator - 1 bit
- Cast type indicator - 2 bits as defined in Table 5
- CSI request - 1 bit

**[Table 7]**

| Value of Cast type indicator | Cast type |
|---|---|
| 00 | Broadcast |
| 01 | Groupcast when HARQ-ACK information includes ACK or NACK |
| 10 | Unicast |
| 11 | Groupcast when HARQ-ACK information includes only NACK |

Hereinafter, an example of SCI format 2-B will be described.

SCI format 2-B is used for the decoding of PSSCH, with HARQ operation when HARQ-ACK information includes only NACK, or when there is no feedback of HARQ-ACK information.

The following information is transmitted by means of the SCI format 2-B:
- HARQ process number - 4 bits
- New data indicator - 1 bit
- Redundancy version - 2 bits
- Source ID - 8 bits
- Destination ID - 16 bits
- HARQ feedback enabled/disabled indicator - 1 bit
- Zone ID - 12 bits
- Communication range requirement - 4 bits determined by higher layer parameter sl-ZoneConfigMCR-Index

Referring to (a) or (b) of FIG. 8, in step S830, the first UE may receive the PSFCH. For example, the first UE and the second UE may determine a PSFCH resource, and the second UE may transmit HARQ feedback to the first UE using the PSFCH resource.

Referring to (a) of FIG. 8, in step S840, the first UE may transmit SL HARQ feedback to the base station through the PUCCH and/or the PUSCH.

FIG. 9 shows three cast types, in accordance with an embodiment of the present disclosure. The embodiment of FIG. 9 may be combined with various embodiments of the present disclosure.

Specifically, FIG. 9(a) shows broadcast-type SL communication, FIG. 9(b) shows unicast type-SL communication, and FIG. 9(c) shows groupcast-type SL communication. In case of the unicast-type SL communication, a UE may perform one-to-one communication with respect to another UE. In case of the groupcast-type SL transmission, the UE may perform SL communication with respect to one or more UEs in a group to which the UE belongs. In various embodiments of the present disclosure, SL groupcast communication may be replaced with SL multicast communication, SL one-to-many communication, or the like.

The following describes a UE procedure to report HARQ-ACK on a sidelink.

A UE may be instructed by SCI format that schedules a reception of PSSCH on one or more subchannels from N^{PSSCH}_{subch} to transmit a PSFCH that includes HARQ-ACK information in response to the reception of a PSSCH. A UE provides HARQ-ACK information including ACK or NACK, or NACK only.

A UE may be provided with the number of slots in a resource pool for PSFCH transmission occasion resources by sl-PSFCH-Period-r16. If the number is zero, PSFCH transmission from a UE is disabled in the resource pool. A UE expects to have a PSFCH transmission occasion resource in slot t'ₖ^{SL} (0≤k < T'ₘₐₓ) if k mod N^{PSFCH}_{PSSCH} = 0, where t'ₖ^{SL} is a slot in the resource pool, and T'ₘₐₓ is the number of slots in the resource pool within 10240 msec, and N^{PSFCH}_{PSSCH} is provided in sl-PSFCH-Period-r16. A UE may be instructed by the upper layer not to transmit a PSFCH in response to the reception of a PSSCH. If a UE receives a PSSCH in the resource pool and the HARQ feedback enabled/disabled indicator field included in the associated SCI format 2-A or SCI format 2-B has a value of 1, the UE provides HARQ-ACK information via PSFCH transmission from in resource pool. A UE transmits the PSFCH in a first slot, wherein the first slot is the slot including a PSFCH resource and after the minimum number of slots provided by sl-MinTimeGapPSFCH-r16 of the resource pool after the last slot of the PSSCH reception.

A UE is provided by sl-PSFCH-RB-Set-r16 with M^{PSFCH}_{PRB,set} of PRBs in a resource pool for PSFCH transmissions on PRBs in the resource pool. For the number of PSSCH slots related to a PSFCH slot that is less than or equal to N_{subch} and N^{PSFCH}_{PSSCH}, the number of subchannels for the resource pool provided by sl-NumSubchannel, a UE allocates the PRB [(i+j-N^{PSFCH}_{PSSCH})-M^{PSFCH}_{subch,slot,} (i+1+j-N^{PSFCH}_{PSSCH})-M^{PSFCH}_{subch,slot-}1] among the M_{PRB, set}^{PSFCH} PRB for slot i and subchannel j among the PSSCH slots associated with the PSFCH slot. Here, M^{PSFCH}_{subch,slot} = M^{PSFCH}_{PRB,set} / (N_{subch}-^{NPSFCH}_{PSSCH}), 0 ≤ i < N^{PSFCH}PSSCH, 0 ≤ j < N_{subch}, and the allocations starts in ascending order for i and continues in ascending order for j. A UE expects M^{PSFCH}_{PRB,set} to be a multiple of N_{subch·}N^{PSFCH}_{PSSCH}.

A UE determines the number of available PSFCH resources for multiplexing HARQ-ACK information included in a PSFCH transmission as R^{PSFCH}_{PRB,CS} = N^{PSFCH}_{type}·M^{PSFCH}_{subch,slot}·N^{PSFCH}_{CS}. Here, N^{PSFCH}_{CS} may be the number of cyclic shift pairs for the resource pool, and based on an indication by the higher layer,
- N^{PSFCH}_{type} = 1, and M^{PSFCH}_{subch,slot} PRB may be related to the starting subchannel of the corresponding PSSCH,
- N^{PSFCH}_{type} = N^{PSSCH}_{subch} and N^{PSSCH}_{subch}·M^{PSFCH}_{subch,slot} PRB is related to one or more subchannels among N^{PSSCH}_{subch} subchannels of the corresponding PSSCH.

A PSFCH resource is indexed first in ascending order of a PRB indexes among N^{PSFCH}_{type}·M^{PSFCH}_{subch,slot} PRBs, after then, it is indexed in ascending order of cyclic shift pair indexes among N^{PSFCH}_{CS} cyclic shift pairs.

A UE determines an index of a PSFCH resource for a PSFCH transmission in response to the PSSCH reception as (P_{ID} + M_{ID}) mod R^{PSFCH}_{PRB,CS}. Here, P_{ID} is a physical layer source ID provided by SCI format 2-A or 2-B scheduling a PSSCH reception, M_{ID} is an ID of a UE receiving a PSSCH, indicated from the higher layer when a UE detects SCI format 2-A in which a cast type indicator field value is "01", M_{ID} is 0 otherwise.

A UE determines m₀ value for calculating a cyclic shift α value from N^{PSFCH}_{CS} and a cyclic shift pair index which corresponds to a PSFCH resource index using Table 8.

**[Table 8]**

| N^{PSFCH}_{CS} | m₀ | | | | | |
|---|---|---|---|---|---|---|
| | Cyclic shift pair index 0 | Cyclic shift pair index 1 | Cyclic shift pair index 2 | Cyclic shift pair index 3 | Cyclic shift pair index 4 | Cyclic shift pair index 5 |
| 1 | 0 | - | - | - | - | - |
| 2 | 0 | 3 | - | - | - | - |
| 3 | 0 | 2 | 4 | - | - | - |
| 6 | 0 | 1 | 2 | 3 | 4 | 5 |

As shown in Table 9, when a UE detects SCI format 2-A with a cast type indicator field value of "01" or "10", or as shown in Table 10, when a UE detects SCI format 2-B or SCI format 2-A with a cast type indicator field value of "11", a UE determines m_{cs} the value for calculating a cyclic shift α value. A UE applies one cyclic shift among cyclic shifts to a sequence used in a PSFCH transmission.

**[Table 9]**

| HARQ-ACK Value | 0 (NACK) | 1 (ACK) |
|---|---|---|
| Sequence cyclic shift | 0 | 6 |

**[Table 10]**

| | | |
|---|---|---|
| HARQ-ACK Value | 0 (NACK) | 1 (ACK) |
| Sequence cyclic shift | 0 | N/A |

Meanwhile, in sidelink (SL) communication, a UE may perform transmission (and/or reception) based on multiple panels and/or beam directions, and in this case, it may be necessary to define a method for managing spatial settings that include information related to the beams or spatial domain transmission/reception filters.

Meanwhile, In the case of downlink (DL), a base station may indicate antenna port quasi-co-location (QCL) information to a UE via a transmission configuration indicator (TCI). In particular, when a DL signal is received via type D, a base station may configure/indicate whether a UE should assume that spatial reception parameters or beam information are the same as those of a specific SSB or CSI-RS.

Meanwhile, in the case of uplink (UL), a base station may configure/indicate the UE's spatial setting for PUSCH transmission or the spatial domain transmission filter to follow the UE's specific SRS transmission resource, PRACH transmission, and/or DL signal reception spatial setting.

According to an embodiment of the present disclosure, the spatial setting information for SL transmission and the spatial setting information for SL reception may be the same at the same time point and/or in the same slot. For example, the spatial setting information may be instructed/configured from other UEs and/or base stations. For example, the spatial setting information may be configured according to the selection of the UE (by UE implementation).

For example, a UE may expect that the spatial setting information for SL transmission and the spatial setting information for SL reception are the same at the same time point and/or in the same slot. Alternatively, for example, a UE may expect that the spatial setting information for SL transmission and the spatial setting information for SL reception are indicated to be the same at the same time point and/or in the same slot.

For example, spatial setting information for SL transmission at the same time and/or in the same slot may be determined according to spatial setting information for SL reception. For example, spatial setting information for SL transmission at the same time and/or in the same slot may be determined based on spatial setting information for SL reception.

For example, spatial setting information for SL reception at the same time and/or in the same slot may be determined according to spatial setting information for SL transmission. For example, spatial setting information for SL reception at the same time and/or in the same slot may be determined based on spatial setting information for SL transmission.

For example, spatial setting information for SL transmission (and/or reception) at the same time point and/or the same slot may be determined based on spatial setting information for the most recently indicated/configured SL transmission (and/or reception) (considering the processing time budget).

For example, if a UE has configured a first spatial setting for SL transmission and then receives a second spatial setting indicated for SL reception, the UE may change the spatial setting for SL transmission to the second spatial setting. For example, the method may be applied when multiple panels are used in common (or all) for transmission and reception operations.

For example, after a UE has configured a first spatial setting for SL reception, if the UE receives a second spatial setting indicated for SL transmission, the UE may change the spatial setting for SL reception to the second spatial setting. For example, the method may be applied when multiple panels are used in common (or all) for transmission and reception operations.

According to an embodiment of the present disclosure, spatial setting information for SL transmission and spatial setting information for SL reception may be different at the same time point and/or in the same slot. For example, spatial setting information for SL transmission and spatial setting information for SL reception may be performed/managed independently. For example, the above method may be applied when multiple panels exist for each of transmission and reception operations, when the processing time for multiple panel control is sufficiently small (or insufficient), or when the processing time for changing spatial setting information is sufficiently small (or insufficient).

For example, even if the spatial setting information for SL transmission is changed (e.g., the spatial setting information for SL transmission is indicated/configured), a UE may maintain the spatial setting information for SL reception (i.e., the spatial setting information for SL reception before the spatial setting information for SL transmission is indicated).

For example, even if the spatial setting information for SL reception is changed (e.g., spatial setting information for SL reception is indicated/configured), a UE may maintain the spatial setting information for SL transmission (i.e., the spatial setting information for SL reception before the spatial setting information for SL reception is indicated).

For example, if a UE configures a first spatial setting for SL transmission and then changes the spatial setting for SL reception from a second spatial setting to a third spatial setting, the UE may maintain the spatial setting for SL transmission as the first spatial setting. For example, if a UE has configured the first spatial setting for SL transmission and then receives an indication/configuration to change the spatial setting for SL reception from the second spatial setting to the third spatial setting, the UE may maintain the spatial setting for SL transmission as the first spatial setting.

For example, if a UE configures a first spatial setting for SL reception and then changes the spatial setting for SL transmission from a second spatial setting to a third spatial setting, the UE may maintain the spatial setting for SL reception as the first spatial setting. For example, if the UE has configured a first spatial setting for SL reception and then receives an indication/configuration to change the spatial setting for SL transmission from a second spatial setting to a third spatial setting, the UE may maintain the spatial setting for SL reception as the first spatial setting.

According to an embodiment of the present disclosure, spatial setting information for SL transmission may be changed differently or independently per cast type, unicast session, recipient for SL transmission, SL channel type, (transmission and/or reception) resource pool, UE mobility-related information (e.g., speed, velocity, direction, acceleration, position, altitude, etc.), transmission priority value, reception priority value, SL HARQ-ACK feedback enabled/disabled for SL transmission, SL HARQ-ACK feedback option, QoS parameters, (remaining) PDB, HARQ process, beam process, source ID, destination ID, and/or TB.

According to an embodiment of the present disclosure, spatial setting information for SL transmission may be managed differently or independently per cast type, unicast session, recipient for SL transmission, SL channel type, (transmission and/or reception) resource pool, UE mobility-related information (e.g., speed, velocity, direction, acceleration, position, altitude, etc.), transmission priority value, reception priority value, SL HARQ-ACK feedback enabled/disabled for SL transmission, SL HARQ-ACK feedback option, QoS parameters, (remaining) PDB, HARQ process, beam process, source ID, destination ID, and/or TB.

According to an embodiment of the present disclosure, spatial setting information for SL transmission may be configured differently or independently per cast type, unicast session, recipient for SL transmission, SL channel type, (transmission and/or reception) resource pool, UE mobility-related information (e.g., speed, velocity, direction, acceleration, position, altitude, etc.), transmission priority value, reception priority value, SL HARQ-ACK feedback enabled/disabled for SL transmission, SL HARQ-ACK feedback option, QoS parameters, (remaining) PDB, HARQ process, beam process, source ID, destination ID, and/or TB.

According to an embodiment of the present disclosure, spatial setting information for SL transmission may be indicated differently or independently per cast type, unicast session, recipient for SL transmission, SL channel type, (transmission and/or reception) resource pool, UE mobility-related information (e.g., speed, velocity, direction, acceleration, position, altitude, etc.), transmission priority value, reception priority value, SL HARQ-ACK feedback enabled/disabled for SL transmission, SL HARQ-ACK feedback option, QoS parameters, (remaining) PDB, HARQ process, beam process, source ID, destination ID, and/or TB.

According to an embodiment of the present disclosure, spatial setting information for SL transmission (and/or reception) in a PSCCH symbol interval (and/or a symbol interval to which a second SCI is mapped) may be different from spatial setting information for SL transmission (and/or reception) in a symbol interval to which the second SCI is mapped (i.e., a symbol interval without PSCCH and/or the second SCI) (and/or a symbol interval to which PSSCH is mapped) and/or a symbol interval to which SL CSI-RS is mapped.

For example, spatial setting information for SL transmission (and/or reception) in the PSCCH symbol interval (and/or the symbol interval to which the first SCI is mapped) may be different from spatial setting information for SL transmission (and/or reception) in a symbol interval to which the second SCI is mapped (i.e., a symbol interval without PSCCH and/or the first SCI) (and/or a symbol interval to which PSSCH is mapped) and/or a symbol interval to which SL CSI-RS is mapped.

For example, spatial setting information for SL transmission (and/or reception) in the PSCCH symbol interval and/or the symbol interval to which the second SCI is mapped may be related to omni-direction.

For example, spatial setting information for SL transmission (and/or reception) in a symbol interval where a second SCI is mapped and/or a symbol interval to which a PSSCH is mapped (i.e., without a PSCCH and/or a second SCI) may be related to spatial setting information for transmission (and/or reception) of a specific beam direction and/or a specific S-SSB.

For example, spatial setting information for SL transmission (and/or reception) in a symbol interval to which a second SCI is mapped and/or a symbol interval to which a PSSCH is mapped (i.e., without a PSCCH and/or a second SCI) may be related to spatial setting information for a specific SL CSI-RS transmission (and/or reception).

For example, spatial setting information for SL transmission (and/or reception) in a symbol interval to which a second SCI is mapped and/or a symbol interval to which a PSSCH is mapped (i.e., without a PSCCH and/or a second SCI) may be related to spatial setting information for a PSCCH (and/or a PSSCH) of a previous transmission (and/or reception) of the UE.

For example, the spatial setting for transmission (and/or reception) of PSSCH may be the same as the spatial setting for transmission (and/or reception) of PSCCH corresponding to the PSSCH.

For example, the spatial setting for transmission (and/or reception) to PSSCH may be indicated/configured through PSCCH (and/or PSSCH) previously transmitted (and/or received) by the UE.

For example, the time interval between the transmission time point of the SL channel indicating/configuring the spatial setting and the time point at which the application of the spatial setting starts may be in the form of a number of symbols (and/or a number of milliseconds, and/or a number of slots) considering the processing time.

And/or, for example, the time interval may be (pre-)configured. And/or, for example, the time interval may be indicated via PSSCH (and/or PSSCH).

According to an embodiment of the present disclosure, the PSCCH/PSSCH transmitting UE may instruct the receiving UE to measure (and/or report) (L1) RSRP (and/or (L1) SINR, and/or beam-related quantity) based on PSSCH DMRS (and/or PSCCH DMRS, and/or SL-CSI-RS). For example, the PSCCH/PSSCH transmitting UE may be configure the receiving UE to measure (and/or report) (L1) RSRP (and/or (L1) SINR, and/or beam-related quantity) based on PSSCH DMRS (and/or PSCCH DMRS, and/or SL-CSI-RS). For example, in the present disclosure, the PSCCH/PSSCH transmitting UE may refer to a UE that transmits PSCCH and transmits PSSCH scheduled based on SCI transmitted through the PSCCH. For example, in the present disclosure, the PSCCH/PSSCH receiving UE may refer to a UE that receives PSCCH and receives PSSCH scheduled based on SCI received through the PSCCH.

For example, the reference signal type used for the measurement may be (pre-)configured and/or indicated via PSCCH (and/or PSSCH).

For example, when reporting the beam-related quantity, the PSCCH/PSSCH receiving UE may indicate information for the reference signal used for measuring the quantity. For example, the information for the reference signal may include at least one of an index for the reference signal resource, a time resource location at which the reference signal was transmitted (e.g., DFN index, physical slot index, and/or logical slot index), and/or information for the PSCCH/PSSCH (For example, source ID, destination ID, HARQ process number, and/or beam process index) transmitted together with the reference signal.

According to an embodiment of the present disclosure, a PSCCH/PSSCH transmitting UE may indicate information related to spatial settings for transmission (and/or reception) to a PSCCH/PSSCH reception UE. For example, the information related to spatial settings for transmission (and/or reception) may be in the form of a beam process index.

For example, the spatial setting for transmission of PSCCHs/PSSCHs with the same beam process index may be the same. For example, the spatial setting for reception of PSCCHs/PSSCHs with the same beam process index may be the same.

For example, the beam process index may exist for each of the spatial setting for transmission and the spatial setting for reception, or a single beam process index may correspond to a combination of the spatial setting for a specific transmission and the spatial setting for reception.

For example, a PSCCH/PSSCH receiving UE may measure the beam-related quantity for a plurality of PSCCH/PSSCHs with the same (or different) spatial settings and/or report at the same time point. For example, a PSCCH/PSSCH transmitting UE may indicate/configure time interval information for applying information related to spatial setting for transmission (and/or reception) together (with the measurement of the beam-related quantity. For example, the time interval information for applying the information related to the spatial setting for transmission (and/or reception) may include information for the reception time point of the PSCCH/PSSCH including the spatial setting information. And/or, for example, the time interval information for applying the information related to the spatial setting for transmission (and/or reception) may be (pre-)configured. For example, the length of the time interval to which information related to spatial setting is to be applied may be (pre)configured and/or indicated through PSCCH/PSSCH.

For example, information related to spatial setting for transmission (and/or reception) indicated by the PSCCH/PSSCH transmitting UE may be used by the receiving UE (determined based on, for example, L1 and/or L2 destination ID) for the PSCCH/PSSCH. For example, the PSCCH/PSSCH transmitting UE may separately indicate information for the UE that may use information related to the spatial setting for transmission (and/or reception) indicated by the PSCCH/PSSCH transmitting UE.

For example, a UE that has received information related to spatial setting for transmission from a PSCCH/PSSCH transmitting UE may use the spatial setting information for the transmission in PSCCH/PSSCH transmission. For example, a UE that has received information related to spatial setting for transmission from a PSCCH/PSSCH transmitting UE may use the spatial setting information for the transmission in PSFCH transmission corresponding to the PSCCH/PSSCH. For example, a UE that has received information related to spatial setting for transmission from a PSCCH/PSSCH transmission UE may use the spatial setting information for the transmission for SL channel transmission.

For example, the spatial setting for transmission to PSFCH may be the same as the spatial setting for reception of PSSCH corresponding to PSFCH. For example, the spatial setting for reception of PSFCH may be the same as the spatial setting for transmission of PSSCH corresponding to PSFCH.

For example, a UE may perform spatial setting for the same transmission as the most recent transmission for all or part of the SL channel transmitted to the PSFCH transmission destination. For example, a UE may perform transmission based on the same spatial setting as the most recent transmission for all or part of the SL channel transmitted to the PSFCH transmission destination.

For example, the spatial setting for PSFCH transmission (and/or reception) may be the same as the spatial setting for PSCCH (and/or PSSCH) transmission (and/or reception) performed in the same slot as the PSFCH. For example, the UE may match the spatial setting for PSFCH transmission (and/or reception) with the spatial setting for PSCCH/PSSCH transmission (and/or reception) performed in the same slot as the PSFCH. For example, the UE may configure the spatial setting for PSFCH transmission (and/or reception) to be the same as the spatial setting for PSCCH/PSSCH transmission (and/or reception) performed in the same slot as the PSFCH.

For example, a UE may match the spatial setting for transmission (and/or reception) of PSCCH/PSSCH to the spatial setting for transmission (and/or reception) of PSFCH performed in the same slot as the PSCCH/PSSCH. For example, the UE may configure the spatial setting for transmission (and/or reception) of the PSCCH/PSSCH to be the same as the spatial setting for transmission (and/or reception) of the PSFCH performed in the same slot as the PSCCH/PSSCH.

For example, the method of configuring spatial settings may be different for each combination of PSFCH transmission (and/or reception) and PSCCH/PSSCH transmission (and/or reception) as described above.

For example, the SL channel may include (unicast) PSCCH (and/or PSSCH) and/or PSFCH.

For example, the spatial setting for PSFCH may be indicated in the corresponding PSCCH/PSSCH. For example, the PSCCH/PSSCH transmitting UE may indicate the spatial setting when the PSCCH/PSSCH receiving UE performs the PSCCH/PSSCH reception, and/or the spatial setting when the receiving UE previously transmitted PSCCH/PSSCH and/or PSFCH.

For example, the spatial setting for PSFCH may be indicated through the corresponding PSCCH/PSSCH. For example, the PSCCH/PSSCH transmitting UE may indicate the spatial setting to be used by the PSCCH/PSSCH receiving UE when performing the PSCCH/PSSCH reception. And/or, for example, the PSCCH/PSSCH transmitting UE may indicate the spatial setting used in the PSCCH/PSSCH transmission previously performed by the PSCCH/PSSCH receiving UE. And/or, for example, the PSCCH/PSSCH transmitting UE may indicate the spatial setting used by the PSCCH/PSSCH receiving UE in the PSFCH transmission for the previously performed PSCCH/PSSCH transmission.

Meanwhile, a plurality of PSFCH transmissions performed at a time point (simultaneously) may have different spatial settings. For example, spatial settings for a plurality of PSFCH transmissions performed at a time point (simultaneously) may be different.

For example, a UE may determine/configure a third spatial setting by simultaneously considering spatial settings for a plurality of PSFCH transmissions. And/or, for example, the beam form corresponding to the third spatial setting may be configured to include all or part of at least one beam form corresponding to the spatial settings for the plurality of PSFCH transmissions.

For example, a UE may perform transmission (and/or reception) based on a spatial setting for a specific PSFCH among spatial settings for a plurality of PSFCH transmissions. For example, the UE may perform the plurality of PSFCH transmissions (and/or reception) based on the spatial setting for a specific PSFCH transmission among the plurality of PSFCH transmissions, among the spatial settings for the plurality of PSFCH transmissions.

For example, the specific PSFCH spatial setting may correspond to maximizing the number of PSFCH transmissions that can be transmitted. That is, for example, the UE may perform the plurality of PSFCH transmissions (and/or receptions) based on the spatial setting that maximizes the number of PSFCH transmissions that can be transmitted among the spatial settings for the plurality of PSFCH transmissions.

For example, a UE may select the specific PSFCH spatial setting. That is, for example, the UE may select, from among spatial settings for a plurality of PSFCH transmissions, a spatial setting to use for performing the plurality of PSFCH transmissions, and may perform the plurality of PSFCH transmissions (and/or reception) based on the selected spatial setting.

For example, the specific PSFCH may be the one with the lowest SL priority value. That is, for example, among the spatial settings for a plurality of PSFCH transmissions, the UE may perform the plurality of PSFCH transmissions (and/or reception) based on the spatial setting for the PSFCH transmission with the lowest SL priority value among the plurality of PSFCH transmissions.

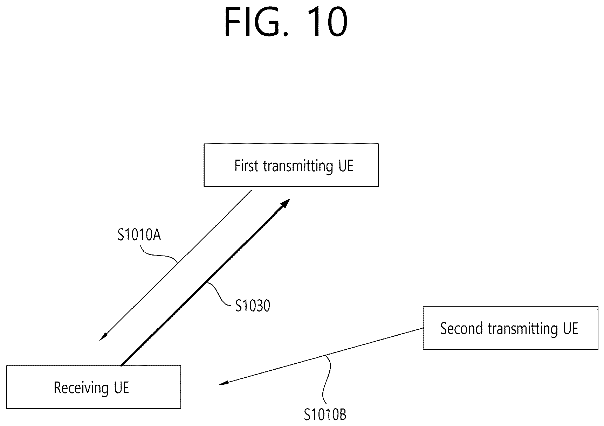

FIG. 10 shows an operation in which a PSCCH/PSSCH receiving UE performs simultaneous PSFCH transmission based on spatial settings according to an embodiment of the present disclosure. The embodiment of FIG. 10 may be combined with various embodiments of the present disclosure.

Referring to FIG. 10, a receiving UE, a first transmitting UE, and a second transmitting UE are shown. For example, the receiving UE may refer to a PSCCH/PSSCH receiving UE, and the first transmitting UE and the second transmitting UE may refer to PSCCH/PSSCH transmitting UEs.

In step S1010A, the receiving UE may receive the first PSCCH/PSSCH transmission performed by the first transmitting UE. That is, for example, the receiving UE may perform first PSCCH/PSSCH reception from the first transmitting UE. For example, the objects of the transmission of the first PSCCH/PSSCH and the reception of the first PSCCH/PSSCH may be the same. For example, the transmission of the first PSCCH/PSSCH may be performed based on the first spatial setting. For example, the reception of the first PSCCH/PSSCH may be performed based on the first spatial setting. For example, the first spatial setting may include information for the first beam direction related to the first PSCCH/PSSCH transmission and the first PSCCH/PSSCH reception.

In step S1010B, the receiving UE may receive the second PSCCH/PSSCH transmission performed by the second transmitting UE. That is, for example, the receiving UE may perform second PSCCH/PSSCH reception from the second transmitting UE. For example, the objects of the second PSCCH/PSSCH transmission and the second PSCCH/PSSCH reception may be the same. For example, the second PSCCH/PSSCH transmission may be performed based on the second spatial setting. For example, the second PSCCH/PSSCH reception may be performed based on the second spatial setting. For example, the second spatial setting may include information for the second beam direction related to the second PSCCH/PSSCH transmission and the second PSCCH/PSSCH reception.

For example, the beam direction may be the angle formed by the baseline and the straight line connecting the transmitting UE and the receiving UE. For example, if the beam direction of the transmission operation and the beam direction of the reception operation differ by 180 degrees, the two beam directions may be assumed to be the same.

For example, step S1010A may be performed before step S1010B, or step S1010B may be performed after step S1010A.

For example, the receiving UE may determine a third spatial setting for performing simultaneous PSFCH transmission for the first PSCCH/PSSCH reception and the second PSCCH/PSSCH reception. The third spatial setting may include information for a third beam direction for performing the simultaneous PSFCH transmission. For example, the simultaneous PSFCH transmission may mean an operation of performing a first PSFCH transmission for the first PSCCH/PSSCH reception and a second PSFCH transmission for the second PSCCH/PSSCH reception simultaneously (in the same slot).

For example, the receiving UE may compare the SL priority value related to the first PSCCH/PSSCH reception and the SL priority value related to the second PSCCH/PSSCH reception, and determine to use the spatial setting used for the PSCCH/PSSCH reception related to the smaller SL priority value as the third spatial setting. For example, in the present embodiment, it is assumed that the SL priority value related to the first PSCCH/PSSCH reception is smaller than the SL priority value related to the second PSCCH/PSSCH reception. That is, the receiving UE may configure the third spatial setting to be the same as the first spatial setting used for the first PSCCH/PSSCH reception, and determine to perform the simultaneous PSFCH transmission using the third spatial setting.

In step S1030, the receiving UE may perform the simultaneous PSFCH transmission using the third spatial setting. For example, since the simultaneous PSFCH transmission is performed based on the same spatial setting as the first PSCCH/PSSCH reception, the beam direction used for the simultaneous PSFCH transmission may be the same as the beam direction in which the first PSCCH/PSSCH transmission and the first PSCCH/PSSCH reception were performed.

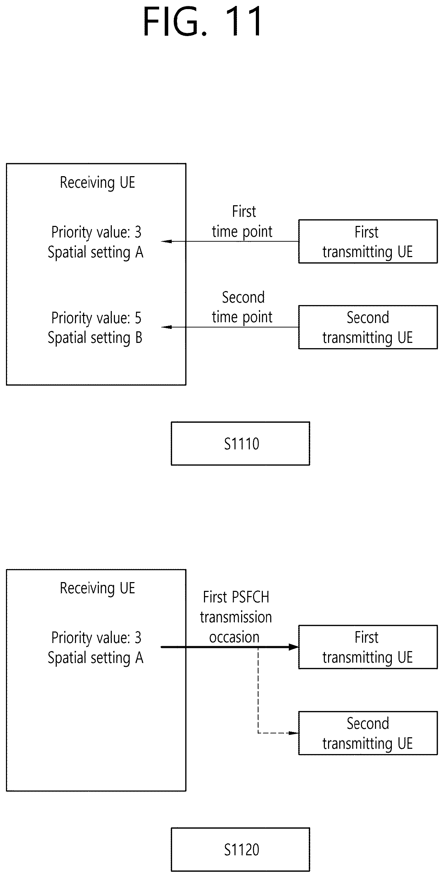

FIG. 11 shows an operation in which a PSCCH/PSSCH receiving UE performs simultaneous PSFCH transmission based on a spatial setting according to an embodiment of the present disclosure. The embodiment of FIG. 11 may be combined with various embodiments of the present disclosure.

Referring to FIG. 11, a receiving UE, a first transmitting UE, and a second transmitting UE are shown. For example, the receiving UE may refer to a PSCCH/PSSCH receiving UE, and the first transmitting UE and the second transmitting UE may refer to PSCCH/PSSCH transmitting UEs.

In step S1110, the receiving UE may receive, at the first time point, the first PSCCH/PSSCH transmission performed by the first transmitting UE. That is, for example, the receiving UE may perform first PSCCH/PSSCH reception from the first transmitting UE. For example, the objects of the transmission of the first PSCCH/PSSCH and the reception of the first PSCCH/PSSCH may be the same. For example, the first PSCCH/PSSCH transmission may be performed based on spatial setting A. For example, the first PSCCH/PSSCH reception may be performed based on the spatial setting A. For example, the priority value related to the first PSCCH/PSSCH transmission and the first PSCCH/PSSCH reception may be 3.

In addition, the receiving UE may receive, at the second time point, the second PSCCH/PSSCH transmission performed by the second transmitting UE. That is, for example, the receiving UE may perform second PSCCH/PSSCH reception from the second transmitting UE. For example, the objects of the second PSCCH/PSSCH transmission and the second PSCCH/PSSCH reception may be the same. For example, the second PSCCH/PSSCH transmission may be performed based on spatial setting B. For example, the second PSCCH/PSSCH reception may be performed based on the spatial setting B. For example, the priority value related to the second PSCCH/PSSCH transmission and the second PSCCH/PSSCH reception may be 5.

For example, the first timing point may be earlier than the second timing point, or the first timing point may be later than the second timing point.

For example, the receiving UE may determine the spatial setting for performing simultaneous PSFCH transmission for the first PSCCH/PSSCH reception and the second PSCCH/PSSCH reception based on the priority values related to the first PSCCH/PSSCH reception and the second PSCCH/PSSCH reception. For example, the simultaneous PSFCH transmission may refer to an operation of performing a first PSFCH transmission for the first PSCCH/PSSCH reception and a second PSFCH transmission for the second PSCCH/PSSCH reception simultaneously (in the same slot).

For example, the receiving UE may compare the SL priority value related to the first PSCCH/PSSCH reception and the SL priority value related to the second PSCCH/PSSCH reception, and determine to use the spatial setting used for the PSCCH/PSSCH reception related to the smaller SL priority value as the spatial setting for the simultaneous PSFCH transmission.

For example, since the priority value 3 related to the reception of the first PSCCH/PSSCH is smaller than the priority value 5 related to the reception of the second PSCCH/PSSCH, the receiving UE may determine to use the spatial setting A for the simultaneous PSFCH transmission.

In step S1120, the receiving UE may perform the simultaneous PSFCH transmission using the spatial setting A. For example, since the simultaneous PSFCH transmission is performed based on the same spatial setting as the first PSCCH/PSSCH reception, the beam direction used for the simultaneous PSFCH transmission may be the same as the beam direction in which the first PSCCH/PSSCH transmission and the first PSCCH/PSSCH reception were performed. That is, depending on the beam direction, the second transmitting UE may or may not receive the PSFCH transmission.

For example, a UE may omit PSFCH transmission for a spatial setting that is not covered by a corresponding beam according to the spatial setting for PSFCH. For example, a UE may omit PSFCH transmission related to a spatial setting that is not covered by a beam corresponding to the spatial setting for PSFCH transmission.

For example, the PSFCH with a lower priority based on the SL priority value may be transmitted preferentially over the PSFCH with a higher priority. For example, according to the spatial setting for PSFCH transmission, the PSFCH transmission with a relatively small priority value based on the comparison of SL priority values may be transmitted preferentially over the PSFCH transmission with a relatively large priority value.

For example, the PSCCH/PSSCH transmitting UE may indicate to the PSCCH/PSSCH receiving UE the time resource at which to perform PSFCH transmission. For example, in the indicated PSFCH time resource, the PSCCH/PSSCH receiving UE may perform PSFCH transmission using a spatial setting suitable for the PSCCH/PSSCH transmitting UE. For example, the spatial setting suitable for the PSCCH/PSSCH transmitting UE may be that indicated to the PSCCH/PSSCH transmitting UE (by the PSCCH/PSSCH receiving UE) and/or the spatial setting used when receiving PSCCH/PSSCH (by the PSCCH/PSSCH receiving UE).

According to an embodiment of the present disclosure, the PSCCH/PSSCH transmitting UE may transmit through consecutive (physical or logical) slots using spatial settings for different transmissions of the same TB. For example, the PSCCH/PSSCH transmitting UE may transmit the same TB using spatial settings for different transmissions, through discontinuous (physical or logical) slots.

For example, PSCCH/PSSCH transmitting UE may transmit the same TB using different spatial settings through consecutive (physical or logical) slots. For example, PSCCH/PSSCH transmitting UE may transmit the same TB using different spatial settings through non-consecutive (physical or logical) slots.

For example, considering receiving beam sweeping, transmission using the same transmission beam information and/or spatial setting may be repeatedly transmitted through consecutive slots. Alternatively, considering receiving beam sweeping, transmission using the same transmission beam information and/or spatial setting may be repeatedly transmitted through non-consecutive slots.

For example, considering beam sweeping of the receiving UE, transmission using the same transmission beam information and/or spatial setting may be repeatedly transmitted through consecutive slots. Alternatively, considering beam sweeping of the receiving UE, transmission using the same transmission beam information and/or spatial setting may be repeatedly transmitted through non-consecutive slots.

According to an embodiment of the present disclosure, the SL transmitting UE may indicate through the PSCCH (and/or the PSSCH) whether the spatial setting information for transmission is the same or different. For example, when performing PSCCH/PSSCH transmission, the transmitting UE may indicate, through the first SCI, the second SCI, and/or the PSSCH, information for the beam and/or spatial setting used for the PSCCH/PSSCH transmission. For example, when performing PSCCH/PSSCH transmission, the transmitting UE may indicate, through the first SCI, the second SCI, and/or the PSSCH, information for the beam information and/or spatial setting to be used in the reservation resources for the PSCCH/PSSCH transmission.

For example, a UE may determine whether to avoid, or allow them to overlap, reservation resources obtained from the received PSCCH/PSSCH, based on beam information obtained from the received PSCCH/PSSCH, a spatial setting used by the UE for reception, and/or a spatial setting to be used by the UE for transmission.

For example, a UE may determine whether to avoid reservation resources, or allow overlap for the reservation resources, obtained from a PSCCH/PSSCH receiving UE, based on beam information obtained from the PSCCH/PSSCH receiving UE, spatial settings used by the receiving UE for reception, and/or spatial settings to be used by the UE (or the receiving UE) for transmission.

For example, a UE may determine whether to avoid reservation resources, or allow overlap for the reservation resources, obtained from the received PSCCH/PSSCH, based on beam information obtained from the received PSCCH/PSSCH, a spatial setting used by the UE for reception, and/or a spatial setting to be used by the UE for transmission.

For example, even if the RSRP measurement value for the PSCCH/PSSCH received by the UE (based on the spatial setting for a specific reception) exceeds the RSRP threshold value, if the spatial setting to which the UE is to use when transmitting is different from the spatial setting for the received PSCCH/PSSCH, the UE may omit the resource exclusion operation for the reserved resource (based on the received PSCCH/PSSCH).

For example, even if the RSRP measurement value for the PSCCH/PSSCH received by the UE (based on the spatial setting for a specific reception) exceeds the RSRP threshold value, if the spatial setting that the UE is to use when transmitting does not overlap with the spatial setting for the received PSCCH/PSSCH in the spatial domain, or if the degree of overlap is negligible, the resource exclusion operation for the reserved resources (based on the received PSCCH/PSSCH) may be omitted.

For example, the RSRP threshold may be different for each transmission priority value, reception priority value, spatial setting for reception, and/or spatial setting for transmission. For example, the initial value for the RSRP threshold may be configured (in advance) for each transmission priority value, reception priority value, spatial setting for reception, and/or spatial setting for transmission.

For example, the number of contiguous and/or non-contiguous slots and the slot interval in which the same TB is transmitted may be (pre)configured and/or indicated through PSCCH/PSSCH.

According to an embodiment of the present disclosure, when a UE generates a set of available resources for PSCCH/PSSCH (in a resource (re)selection operation), the UE may perform a resource exclusion operation for a resource bundle for (or related to) a plurality of slots corresponding to the PSCCH/PSSCH received by the UE.

For example, the PSCCH/PSSCH transmitting UE may indicate information regarding the position (of the current PSCCH/PSSCH transmission) within a PSCCH/PSSCH transmission bundle and/or information related to the number of transmissions in the PSCCH/PSSCH transmission bundle performed prior to (the corresponding PSCCH/PSSCH transmission) through the PSCCH/PSSCH. For example, through the above procedure, when the UE selects resources, the UE may determine whether to exclude resources for the PSCCH/PSSCH resource bundle.

For example, if a UE receives a plurality of PSCCH/PSSCHs for a PSCCH/PSSCH transmission bundle, the UE may determine whether to exclude resources for the PSCCH/PSSCH transmission bundle by comparing the maximum value among the RSRP measurement values related to each PSCCH/PSSCH transmission with the RSRP threshold value.

For example, when the UE receives a plurality of PSCCH/PSSCHs for the PSCCH/PSSCH transmission bundle, the UE may determine whether to exclude resources for the PSCCH/PSSCH transmission bundle by comparing the minimum value among the RSRP measurement values related to each PSCCH/PSSCH transmission with the RSRP threshold value.

For example, if the UE receives a plurality of PSCCH/PSSCHs for the PSCCH/PSSCH transmission bundle, the UE may determine whether to exclude resources for the PSCCH/PSSCH transmission bundle by comparing the average value of the RSRP measurement values related to each PSCCH/PSSCH transmission with the RSRP threshold value.

For example, if the UE receives a plurality of PSCCH/PSSCHs for the PSCCH/PSSCH transmission bundle, the UE may determine whether to exclude resources by comparing the RSRP measurement values related to each PSCCH/PSSCH transmission with the RSRP threshold value. At this time, if resource exclusion is determined for at least one resource, the UE may determine to exclude available resources for the resource bundle.

According to an embodiment of the present disclosure, when performing sensing for a resource (re)selection procedure, the UE may determine (and/or restrict) a spatial setting for transmission related to the resource (re)selection procedure based on a spatial setting for reception.

For example, the spatial setting for transmission related to the resource (re)selection procedure may be the same as the spatial setting for reception in the resource (re)selection procedure.

For example, the beam direction corresponding to the spatial setting for transmission related to the resource (re)selection procedure may be the same as or adjacent to the beam direction corresponding to the spatial setting for reception in the resource (re)selection procedure.

For example, when performing sensing for the (re)selection procedure, a UE may determine and/or restrict the spatial setting for reception based on the spatial setting for transmission of the UE.

The various schemes of the present disclosure may be applied differently per unicast sessions (groups), cast types, transmission priority values, reception priority values, SL transmission with SL HARQ-ACK feedback enabled/disabled, SL HARQ-ACK feedback options, QoS parameters, (remaining) PDB, congestion control level, UE mobility-related information (e.g., speed, velocity, direction, acceleration, position, altitude, etc.) per (transmission and/or reception) resource pool, SL transmission or reception, HARQ process, beam process, source ID, destination ID, and/or TB.

For example, in various embodiments of the present disclosure, the units of (pre)configuration may be configured in the form of the above different combinations. For example, in embodiments of the present disclosure, parameter indication and management via PSCCH (and/or PSSCH) may be performed in units of the above different combinations.

In various embodiments of the present disclosure, spatial setting, TCI information, and/or QCL information, etc., may refer to each other. For example, spatial setting, TCI information, and/or QCL information, etc., may be replaced and interpreted as information related to beams, beam directions, spatial domain transmission, or reception filters, etc.

In various embodiments of the present disclosure, for example, the fact that the spatial setting information for transmission is the same may mean that the spatial domain transmission filter of the UE is the same for two different transmission signals.

In various embodiments of the present disclosure, for example, the fact that the spatial setting information for reception is the same may mean that two different received signals are in a QCL "Type D" relationship. And/or, for example, the fact that the spatial setting information for reception is the same may mean that two different signals are in a relationship in which they use the same spatial reception parameters.

The various schemes of the present disclosure may be applied differently per SL channel. The various schemes of the present disclosure may be applied differently according to the type of information included in the SL channel.

Meanwhile, in the next-generation system, the transmission/reception node (UE and/or base station) may perform transmission and reception operations simultaneously within the same frequency band (or frequency region), and in the above case, the transmission signal of the transmission/reception node may be received again through the receiving end of the transmission/reception node. For example, a situation in which a signal transmitted by the transmitting node itself is received again by the receiving end (of the transmitting node) may be called self-interference, and the transmitting UE may minimize (residual) self-interference through an interference control method such as successive interference cancellation (SIC), etc.

Meanwhile, after the interference control processing, the size and/or level of (residual) self-interference may be determined according to transmit power for transmission signal of transmission/reception node, and size of self-interference may be reduced by several hundred dB (e.g., 110 dB) relative to transmission signal power depending on interference control processing method.

Meanwhile, in the procedure of (re)selecting resources for SL operation, a UE may determine the reserved resources, non-preferred resources, preferred resources, and/or available candidate resources of other UEs from the SCI and/or PSCCH/PSSCH received from other UEs, and the RSRP measurement values for the reserved resources of other UEs in the above procedure may be used to estimate the interference level.

On the other hand, in a situation where UEs with full-duplex capability coexist, the RSRP measurement values may be measured differently according to (residual) self-interference, etc., in the case where the UE performs only reception operation and in the case where the UE uses transmission and reception simultaneously at the same time point.

According to an embodiment of the present disclosure, RSRP threshold values and/or RSRP measured values for received PSCCH (and/or PSSCH) may differ between a region where a UE performs only SL reception operation and a region where a UE performs (both) SL transmission and SL reception operation. For example, this may be because residual self-interference related to (SL) transmission may be received at the SL receiving end when the UE performs SL transmission and SL reception simultaneously, and this is to perform operations differently depending on the presence or absence of residual self-interference related to its own transmission when the UE determines whether there is overlap with other UEs.

For example, the UE may determine the value obtained by subtracting a specific offset value from the RSRP measurement value in the time interval in which the UE performs SL transmission as the RSRP measurement value.

For example, the second RSRP threshold used by a UE during a time interval in which it performs SL transmission may be the form obtained by adding a specific offset value to the first RSRP threshold used during a time interval in which SL transmission is not performed.

For example, the RSRP threshold value and/or the boosting value for the RSRP threshold value may be separately (pre-)configured and/or separately managed (whether or not to boost the RSRP threshold value) between the time interval during which the UE performs SL transmission and the time interval during which the UE does not perform SL transmission.

For example, the specific offset value may be (pre-)configured per resource pool, congestion control level, QoS parameter, transmission priority, reception priority, transmission frequency region, reception frequency region, overlap and difference between transmission frequency region and reception frequency region, and/or transmission power (range).

For example, the specific offset value may be predefined per resource pool, congestion control level, QoS parameter, transmission priority, reception priority, transmission frequency region, reception frequency region, overlap and difference between transmission frequency region and reception frequency region, and/or transmission power (range).

For example, the specific offset value may be a value that UE selects per resource pool, congestion control level, QoS parameter, transmission priority, reception priority, transmission frequency region, reception frequency region, overlap and difference between transmission frequency region and reception frequency region, and/or transmission power (range).

For example, the specific offset value and/or whether to apply (the specific offset value) may be different according to the frequency region in which the UE measures the RSRP and/or the frequency region in which the UE performs SL transmission.

For example, a specific offset value for RSRP measured for the frequency region in which the UE performs SL transmission and/or its adjacent regions may be configured to be greater than or equal to a specific offset value for other frequency regions.

For example, a specific offset value for RSRP measured for the frequency region in which the UE performs SL transmission and/or its adjacent regions may be used (as a specific offset value for RSRP measured for the frequency region in which the UE performs SL transmission and/or its adjacent regions).

According to an embodiment of the present disclosure, in a time region in which both SL transmission and SL reception are performed, whether or not to perform the operation of step 5 in the resource (re)selection procedure may be determined differently based on a specific condition.

For example, the step 5 in the resource (re)selection procedure may refer to an operation that excludes potential available resources derived based on non-monitored slots and resource reservation cycle candidate values from the candidate resource set.

For example, if the UE performs SL reception in the time region where SL transmission is performed, the UE may omit the operation of the step 5 of the resource (re)selection procedure.

For example, when the UE performs SL reception in the time region where SL transmission is performed, if there is a detected SCI and/or IUC, the UE may omit the operation of the step 5 in the resource (re)selection procedure.

For example, if a UE performs SL reception in the time region where SL transmission is performed, the UE may perform the step 5 operation in the resource (re)selection procedure.

For example, when a UE performs SL reception in a time region where SL transmission is performed, if no SCI is detected in the time region, the UE may perform step 5 of the resource (re)selection procedure.

For example, whether or not step 5 is performed may be enabled and/or disabled through (pre-)configuration.

For example, (whether or not step 5 is performed) may differ according to the transmission priority of the UE.

According to an embodiment of the present disclosure, a UE may not perform SL reception operation for a (time and/or frequency) region in which SL transmission is performed and/or for a resource adjacent to a (time and/or frequency) resource in which SL transmission is performed.

For example, the adjacent resource may be a resource existing within a predefined (or (pre)configured) number of PRBs above (and/or below) the SL transmission resource. And/or, for example, the adjacent resource may be a resource existing within a predefined (or (pre-)configured) slots before (and/or after) the SL transmission resource. For example, the UE may perform SL reception for a (all or part of) region other than the (time and/or frequency) region where SL transmission is performed.

According to the present disclosure, RSSI threshold value for RSSI measurement, CBR measurement, CRmeasurement, and/or CBR measurement may be different for a region where UE performs only SL reception operation and a region where UE performs both SL transmission and SL reception operation. This may be because, when SL transmission and SL reception are performed simultaneously, residual self-interference related to SL transmission may be received at the SL reception end of the UE, and therefore, when determining overlap with other UEs, operations are performed differently depending on the presence or absence of the residual self-interference.

For example, the UE may determine a value obtained by subtracting a specific offset value from the RSSI measurement value in the time interval in which the UE performs SL transmission as the RSSI threshold value.

For example, the second RSSI threshold used during the time interval in which the UE performs SL transmission may be in the form obtained by adding a specific offset value to the first RSSI threshold used during the time interval in which SL transmission is not performed.

For example, RSSI threshold value may be separately (pre-)configured between time interval when UE performs SL transmission and time interval when UE does not perform SL transmission.

For example, the specific offset value may be (pre-)configured per resource pool, congestion control level, QoS parameter, transmission priority, reception priority, transmission frequency region, reception frequency region, overlap and difference between transmission frequency region and reception frequency region, and/or transmission power (range).

For example, the specific offset value may be predefined per resource pool, congestion control level, QoS parameter, transmission priority, reception priority, transmission frequency region, reception frequency region, overlap and difference between transmission frequency region and reception frequency region, and/or transmission power (range).

For example, the specific offset value may be a value selected by a UE per resource pool, congestion control level, QoS parameter, transmission priority, reception priority, transmission frequency region, reception frequency region, overlap and difference between transmission frequency region and reception frequency region, and/or transmission power (range).

For example, the specific offset value and/or whether to apply (the specific offset value) may be different depending on the frequency region in which the UE measures RSSI and/or the frequency region in which the UE performs SL transmission.

According to an embodiment of the present disclosure, when a UE performs SL transmission and SL reception operations in the same time interval, if an overlap with (frequency and/or time) resources in the time interval in which the SCI is received is determined based on the SCI (and/or IUC) received by the UE, the UE may stop the SL transmission in progress.

For example, the transmission stopping operation may be performed when the transmission priority value for SL transmission is greater than or equal to the reception priority value for SL reception that overlaps.

For example, the transmission stopping operation may be performed when the priority value related to the overlapping SL reception is less than or equal to a ((pre-)configured) threshold value.

For example, the transmission stopping operation may be performed when the transmission priority value related to the SL transmission is greater than or equal to a ((pre-)configured) specific threshold value.

For example, the transmission stopping operation may be performed when the transmission stopping operation is activated (through (pre-)configuration, etc.).

For example, when SL channels overlap, a UE that is to perform a transmission stopping operation in the overlapping time region may be selected from all or some of the UEwith full duplex capability. For example, when SL channels overlap, a UE that is to perform a transmission stopping operation in the overlapping time region may be configured as all or some of the UEs with full duplex capability.

For example, when SL channels overlap, the SL channel that performs the transmission stopping operation in the overlapping time region may be selected from all or some of the UE with full duplex capability. For example, when SL channels overlap, the SL channel that performs the transmission stopping operation in the overlapping time region may be configured based on all or some of the UEs with full duplex capability.

For example, the UE may indicate the presence or absence of full-duplex capability and/or whether the transmission stopping operation is activated via SCI (and/or second SCI).

For example, the time point at which the transmission stopping operation starts may be selected according to the implementation of the UE. Alternatively, for example, the time point at which the transmission stopping operation starts may be a time point after a specific time interval from the end of the symbol in which the SCI (and/or the second SCI) is received. For example, the specific time interval may be a value that is (pre)configured (or defined).

In various embodiments of the present disclosure, the RSRP measurement value, the RSRP threshold value, and/or the offset value thereof, etc., may be used when a UE determining whether to exclude available resources that overlap with reserved resources (and/or transmission resources) of other UEs from a candidate resource set in the SL resource (re)selection procedure. And/or, for example, the RSRP measurement value, the RSRP threshold value, and/or the offset value thereof may be used when the UE determines whether there is a resource conflict with a transmission resource in the SL resource (re)selection procedure.

Meanwhile, when AGC operation is performed, the received power may be overestimated due to (residual) self-interference, and accordingly, a quantization error may occur when actual reception operation is performed.

For example, when a first UE transmits a PSCCH/PSSCH to a second UE in a time region in which the second UE performs transmission, the MCS, modulation order, and/or coding rate may be restricted.

For example, in the above, the second UE may provide the first UE with information for the transmission performing time region of the second UE.

For example, the first UE may derive information for the transmission performing time region of the second UE based on the SCI transmitted by the second UE. For example, the first UE may derive information for the transmission performing time region of the second UE based on the SCI transmitted by the second UE.

According to an embodiment of the present disclosure, the maximum number of transmissions may differ between a case where only PSFCH transmission is performed in PSFCH transmission/reception operations and a case where PSFCH transmission and reception operations are (both) performed. For example, the maximum number of receptions may differ between a case where only PSFCH reception is performed and a case where both PSFCH transmission and reception are performed.

For example, the number of PSCCH BDs for the case where only SL reception operation is performed may be different from the number of PSCCH BDs for the case where (SL) transmission and SL reception operations are (both) performed. For example, the number of PSCCH BDs for the case where only SL reception operations are performed may be less than the number of PSCCH BDs for the case where (all) SL reception operations are performed. Alternatively, for example, the number of PSCCH BDs for the case where (all) SL reception operations are performed may be less than the number of PSCCH BDs for the case where only SL reception operations are performed.

For example, between regions where a transmission node performs only reception operations and regions where (both) transmission and reception operations are performed, the energy detection threshold value (and/or the energy detection value during channel sensing) used to determine whether a channel is BUSY or IDLE during channel sensing in the unlicensed band may be different.

According to an embodiment of the present disclosure, a specific offset value may be used for energy detection value measured with respect to an RB set, a carrier, a BWP, a frequency region, and/or an adjacent region thereof, in which a transmission node performs transmission. And/or, for example, the offset value may be used in a direction to reduce the original energy detection value.

For example, a specific offset value may be used for the energy detection threshold value for the RB set, carrier, BWP, frequency region, and/or its adjacent region in which the transmission node performs transmission. And/or, for example, the offset value may be used in the form of increasing the threshold value.

According to an embodiment of the present disclosure, CSI, interference measurement method, CSI, and/or interference measurement value may be different for a region where UE performs only receiving operation and a region where UE performs (both) transmitting and receiving operation. For example, the UE may measure CSI and/or interference for a region where only the receiving operation is performed. And/or, for example, the UE may omit measurement of CSI and/or interference based on a reference signal for a region where both the transmitting and receiving operations are performed.

For example, when reporting CSI, the UE may together indicate whether the reference signal used for measuring CSI and/or interference existed in a region where only reception operation is performed and/or existed in a region where (both) transmission and reception operations are performed. For example, the UE may measure (and/or report) CSI and/or interference separately for each of the regions where only reception operations are performed and the regions where both transmission and reception operations are performed.

Various embodiments of the present disclosure may be applied differently per unicast session (group), cast type, transmission priority value, SL transmission with SL HARQ-ACK feedback enabled/disabled, SL HARQ-ACK feedback option, QoS parameter, (remaining) PDB, resource pool, and/or congestion control level.

Various embodiments of the present disclosure may be applied differently per (maximum) transmission power, self-interference cancellation capability, whether or not there is overlap with the frequency region where transmission and reception operations are performed (occur) simultaneously, and/or the degree thereof.

Various embodiments of the present disclosure may be applied differently per SL channel. Various schemes of the present disclosure may be applied differently depending on the type of information included in the SL channel.

In various embodiments of the present disclosure, specific measurement values such as RSRP have been described, but the operation of processing the measured values differently when transmission and reception operations are performed together (for the same frequency band and/or overlapping (or adjacent) frequency regions) and when only reception operations are performed, or the operation of differently configuring threshold values for the measured values may be applied by extension from the concept of the present disclosure.

According to the prior art, SL communication based on multiple panels and/or beam directions could not be performed in frequency range (FR) 2. According to various embodiments of the present disclosure, SL communication may be performed based on multiple panels, beam directions, and/or spatial settings.

For example, in SL communication in FR2, the UE may perform transmission and/or reception based on multiple panels and/or beam directions. Here, it is necessary to define a spatial setting including beam-related information or spatial domain transmission/reception filter information.

According to various embodiments of the present disclosure, the PSFCH transmission may be performed using a spatial setting determined based on the priority of the PSFCH transmission. For example, when a UE performs a resource (re)selection operation, the received SCI obtained by the corresponding reception beam may be referenced according to the transmission beam. For example, when a UE performs a resource (re)selection operation, the resource (re)selection operation may be performed based on the SCI received and obtained through the reception beam determined based on the transmission beam.

Furthermore, according to various embodiments of the present disclosure, when performing SL communication based on multiple panels and/or beam directions, ambiguity as to which of the plurality of PSFCH transmissions should be given priority in terms of spatial setting may be resolved.

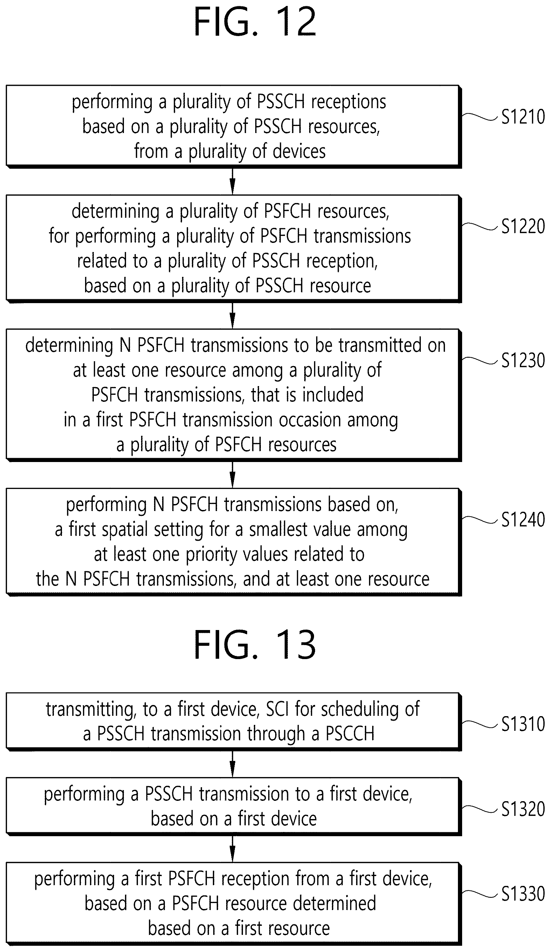

FIG. 12 shows a procedure for performing wireless communication by the first device according to an embodiment of the present disclosure. The embodiment of FIG. 12 may be combined with various embodiments of the present disclosure.

Referring to FIG. 12, in step S1210, a first device may perform a plurality of physical sidelink shared channel, PSSCH, receptions based on a plurality of PSSCH resources, from a plurality of devices. In step S1220, the first device may determine a plurality of physical sidelink feedback channel, PSFCH, resources, for performing a plurality of PSFCH transmissions related to the plurality of PSSCH reception, based on the plurality of PSSCH resource. In step S1230, the first device may determine N PSFCH transmissions to be transmitted on at least one resource among the plurality of PSFCH transmissions, that is included in a first PSFCH transmission occasion among the plurality of PSFCH resources. In step S1240, the first device may perform the N PSFCH transmissions based on, a first spatial setting for a smallest value among at least one priority values related to the N PSFCH transmissions, and the at least one resource.

For example, additionally, the fist device may receive, from a second device among the plurality of devices, information for the first PSFCH transmission occasion.

For example, additionally, the fist device may receive, from a second device among the plurality of devices, information for a second spatial setting that is used in a first PSSCH transmission performed by the second device.

For example, a reference signal received power, RSRP, threshold value used for selecting a first resource in which the first PSSCH transmission is performed may be configured for the second spatial setting.

For example, the first PSSCH transmission may be related to at least one PSFCH transmission with a smallest value among the at least one priority value, and the information for the second spatial setting may be received through the first PSSCH transmission.

For example, the second spatial setting may be the same as the first spatial setting.

For example, an RSRP threshold value, that is used for selecting a first resource in which a first PSSCH reception among at least one PSSCH reception related to at least one PSFCH transmission with a smallest value among the at least one priority value is performed, may be configured for the first spatial setting.

For example, a first beam form corresponding to the first spatial setting may include a second beam form corresponding to a second spatial setting for a value that is not a smallest value among the at least one priority value.

For example, a second spatial setting, that is used for at least one PSSCH transmission related to at least one PSFCH transmission with a smallest value among the at least one priority value, may be the same as the first spatial setting.

For example, a PSSCH transmission performed in the first PSFCH transmission occasion may be performed based on the first spatial setting.

For example, the first spatial setting may include information for a first beam process index.

For example, the first spatial setting may be the same as a second spatial setting, based on the second spatial setting including a second beam process index, that is the same as the first beam process index.

For example, additionally, the fist device may receive, from a second device included in the plurality of devices, a measurement result related to a beam.

The above embodiment may be applied to various devices described below. For example, a processor 102 of a first device 100 may control a transceiver 106 to perform a plurality of physical sidelink shared channel, PSSCH, receptions based on a plurality of PSSCH resources, from a plurality of devices. And, the processor 102 of the first device 100 may determine a plurality of physical sidelink feedback channel, PSFCH, resources, for performing a plurality of PSFCH transmissions related to the plurality of PSSCH reception, based on the plurality of PSSCH resource. And, the processor 102 of the first device 100 may determine N PSFCH transmissions to be transmitted on at least one resource among the plurality of PSFCH transmissions, that is included in a first PSFCH transmission occasion among the plurality of PSFCH resources. And, the processor 102 of the first device 100 may control a transceiver 106 to perform the N PSFCH transmissions based on, a first spatial setting for a smallest value among at least one priority values related to the N PSFCH transmissions, and the at least one resource.

According to an embodiment of the present disclosure, a first device for performing wireless communication may be proposed. For example, the first device may comprise: at least one transceiver; at least one processor; and at least one memory operably connected to the at least one processor and storing instructions that, based on being executed by the at least one processor, cause the first device to perform operations. For example, the operations may comprise: performing a plurality of physical sidelink shared channel, PSSCH, receptions based on a plurality of PSSCH resources, from a plurality of devices; determining a plurality of physical sidelink feedback channel, PSFCH, resources, for performing a plurality of PSFCH transmissions related to the plurality of PSSCH reception, based on the plurality of PSSCH resource; determining N PSFCH transmissions to be transmitted on at least one resource among the plurality of PSFCH transmissions, that is included in a first PSFCH transmission occasion among the plurality of PSFCH resources; and performing the N PSFCH transmissions based on, a first spatial setting for a smallest value among at least one priority values related to the N PSFCH transmissions, and the at least one resource.

For example, additionally, the operations further comprise: receiving, from a second device among the plurality of devices, information for the first PSFCH transmission occasion.

For example, additionally, the operations further comprise: receiving, from a second device among the plurality of devices, information for a second spatial setting that is used in a first PSSCH transmission performed by the second device.

For example, a reference signal received power, RSRP, threshold value used for selecting a first resource in which the first PSSCH transmission is performed may be configured for the second spatial setting.

For example, the first PSSCH transmission may be related to at least one PSFCH transmission with a smallest value among the at least one priority value, and the information for the second spatial setting may be received through the first PSSCH transmission.

For example, the second spatial setting may be the same as the first spatial setting.

For example, an RSRP threshold value, that is used for selecting a first resource in which a first PSSCH reception among at least one PSSCH reception related to at least one PSFCH transmission with a smallest value among the at least one priority value is performed, may be configured for the first spatial setting.

For example, a first beam form corresponding to the first spatial setting may include a second beam form corresponding to a second spatial setting for a value that is not a smallest value among the at least one priority value.

For example, a second spatial setting, that is used for at least one PSSCH transmission related to at least one PSFCH transmission with a smallest value among the at least one priority value, may be the same as the first spatial setting.

For example, a PSSCH transmission performed in the first PSFCH transmission occasion may be performed based on the first spatial setting.

For example, the first spatial setting may include information for a first beam process index.

For example, the first spatial setting may be the same as a second spatial setting, based on the second spatial setting including a second beam process index, that is the same as the first beam process index.

For example, additionally, the operations further comprise: receiving, from a second device included in the plurality of devices, a measurement result related to a beam.

According to an embodiment of the present disclosure, a device adapted to control a first user equipment, UE, may be proposed. For example, the device may comprise: at least one processor; and at least one memory operably connected to the at least one processor and storing instructions that, based on being executed by the at least one processor, cause the first UE to perform operations. For example, the operations may comprise: performing a plurality of physical sidelink shared channel, PSSCH, receptions based on a plurality of PSSCH resources, from a plurality of UEs; determining a plurality of physical sidelink feedback channel, PSFCH, resources, for performing a plurality of PSFCH transmissions related to the plurality of PSSCH reception, based on the plurality of PSSCH resource; determining N PSFCH transmissions to be transmitted on at least one resource among the plurality of PSFCH transmissions, that is included in a first PSFCH transmission occasion among the plurality of PSFCH resources; and performing the N PSFCH transmissions based on, a first spatial setting for a smallest value among at least one priority values related to the N PSFCH transmissions, and the at least one resource.

According to an embodiment of the present disclosure, a non-transitory computer-readable storage medium storing instructions may be proposed. For example, the instructions, based on being executed, may cause a first device to: perform a plurality of physical sidelink shared channel, PSSCH, receptions based on a plurality of PSSCH resources, from a plurality of devices; determine a plurality of physical sidelink feedback channel, PSFCH, resources, for performing a plurality of PSFCH transmissions related to the plurality of PSSCH reception, based on the plurality of PSSCH resource; determine N PSFCH transmissions to be transmitted on at least one resource among the plurality of PSFCH transmissions, that is included in a first PSFCH transmission occasion among the plurality of PSFCH resources; and perform the N PSFCH transmissions based on, a first spatial setting for a smallest value among at least one priority values related to the N PSFCH transmissions, and the at least one resource.

FIG. 13 shows a procedure for performing wireless communication by the second device according to an embodiment of the present disclosure. The embodiment of FIG. 12 may be combined with various embodiments of the present disclosure.

Referring to FIG. 13, in step S1310, a second device may transmit, to a first device, sidelink control information, SCI, for scheduling of a physical sidelink shared channel, PSSCH, transmission through a physical sidelink control channel, PSCCH. In step S1320, the second device may perform the PSSCH transmission to the first device, based on a first device. In step S1330, the second device may perform a first PSFCH reception from the first device, based on a physical sidelink feedback channel, PSFCH, resource determined based on the first resource. For example, the first PSFCH reception may be a reception for a first PSFCH transmission included in N PSFCH transmissions transmitted by the first device, the first PSFCH transmission may be performed based on a first spatial setting, and the first spatial setting may be a spatial setting for a smallest value among at least one priority value related to the N PSFCH transmission.

For example, a second spatial setting may be used for the PSSCH transmission, and the SCI may include information for the second spatial setting.

The above embodiment may be applied to various devices described below. For example, a processor 202 of a second device 200 may control a transceiver 206 to transmit, to a first device 100, sidelink control information, SCI, for scheduling of a physical sidelink shared channel, PSSCH, transmission through a physical sidelink control channel, PSCCH. And, the processor 202 of the second device 200 may control the transceiver 206 to perform the PSSCH transmission to the first device 100, based on a first device. And, the processor 202 of the second device 200 may control the transceiver 206 to perform a first PSFCH reception from the first device 100, based on a physical sidelink feedback channel, PSFCH, resource determined based on the first resource. For example, the first PSFCH reception may be a reception for a first PSFCH transmission included in N PSFCH transmissions transmitted by the first device 100, the first PSFCH transmission may be performed based on a first spatial setting, and the first spatial setting may be a spatial setting for a smallest value among at least one priority value related to the N PSFCH transmission.

According to an embodiment of the present disclosure, a second device for performing wireless communication may be proposed. For example, the second device may comprise: at least one transceiver; at least one processor; and at least one memory operably connected to the at least one processor and storing instructions that, based on being executed by the at least one processor, cause the second device to perform operations. For example, the operations may comprise: transmitting, to a first device, sidelink control information, SCI, for scheduling of a physical sidelink shared channel, PSSCH, transmission through a physical sidelink control channel, PSCCH; performing the PSSCH transmission to the first device, based on a first device; and performing a first PSFCH reception from the first device, based on a physical sidelink feedback channel, PSFCH, resource determined based on the first resource, wherein the first PSFCH reception may be a reception for a first PSFCH transmission included in N PSFCH transmissions transmitted by the first device, wherein the first PSFCH transmission may be performed based on a first spatial setting, and wherein the first spatial setting may be a spatial setting for a smallest value among at least one priority value related to the N PSFCH transmission.

For example, a second spatial setting may be used for the PSSCH transmission, and the SCI may include information for the second spatial setting.

Various embodiments of the present disclosure may be combined with each other.

Hereinafter, device(s) to which various embodiments of the present disclosure can be applied will be described.

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/description, the same reference symbols may denote the same or corresponding hardware blocks, software blocks, or functional blocks unless described otherwise.

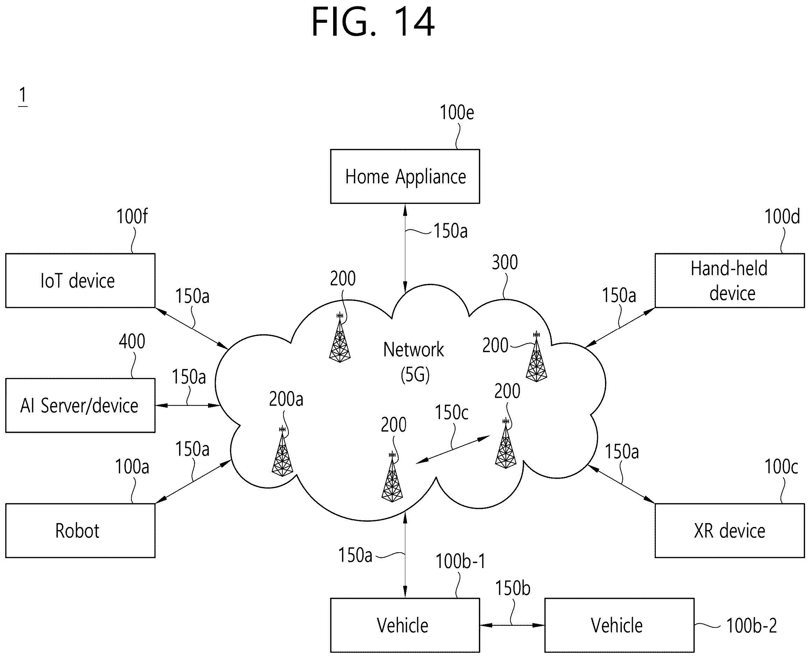

FIG. 14 shows a communication system 1, based on an embodiment of the present disclosure. The embodiment of FIG. 14 may be combined with various embodiments of the present disclosure.

Referring to FIG. 14, a communication system 1 to which various embodiments of the present disclosure are applied includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

Here, wireless communication technology implemented in wireless devices 100a to 100f of the present disclosure may include Narrowband Internet of Things for low-power communication in addition to LTE, NR, and 6G. In this case, for example, NB-IoT technology may be an example of Low Power Wide Area Network (LPWAN) technology and may be implemented as standards such as LTE Cat NB1, and/or LTE Cat NB2, and is not limited to the name described above. Additionally or alternatively, the wireless communication technology implemented in the wireless devices 100a to 100f of the present disclosure may perform communication based on LTE-M technology. In this case, as an example, the LTE-M technology may be an example of the LPWAN and may be called by various names including enhanced Machine Type Communication (eMTC), and the like. For example, the LTE-M technology may be implemented as at least any one of various standards such as 1) LTE CAT 0, 2) LTE Cat M1, 3) LTE Cat M2, 4) LTE non-Bandwidth Limited (non-BL), 5) LTE-MTC, 6) LTE Machine Type Communication, and/or 7) LTE M, and is not limited to the name described above. Additionally or alternatively, the wireless communication technology implemented in the wireless devices 100a to 100f of the present disclosure may include at least one of Bluetooth, Low Power Wide Area Network (LPWAN), and ZigBee considering the low-power communication, and is not limited to the name described above. As an example, the ZigBee technology may generate personal area networks (PAN) related to small/low-power digital communication based on various standards including IEEE 802.15.4, and the like, and may be called by various names.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

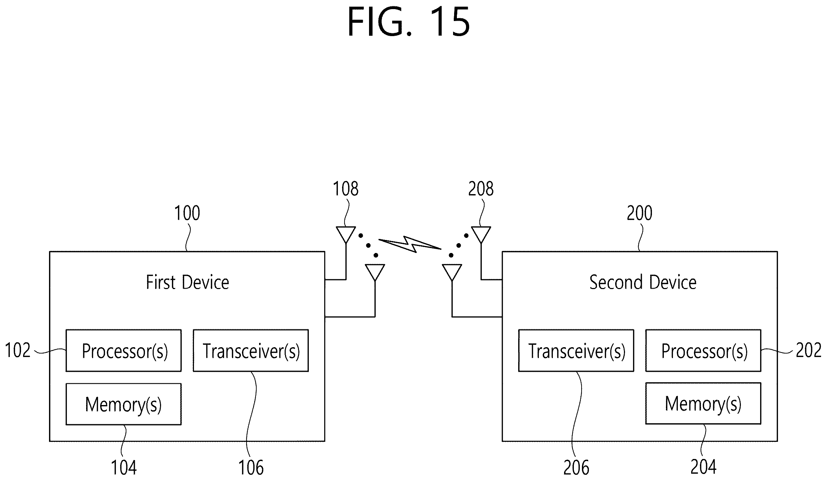

FIG. 15 shows wireless devices, based on an embodiment of the present disclosure. The embodiment of FIG. 15 may be combined with various embodiments of the present disclosure.

Referring to FIG. 15, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 14.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

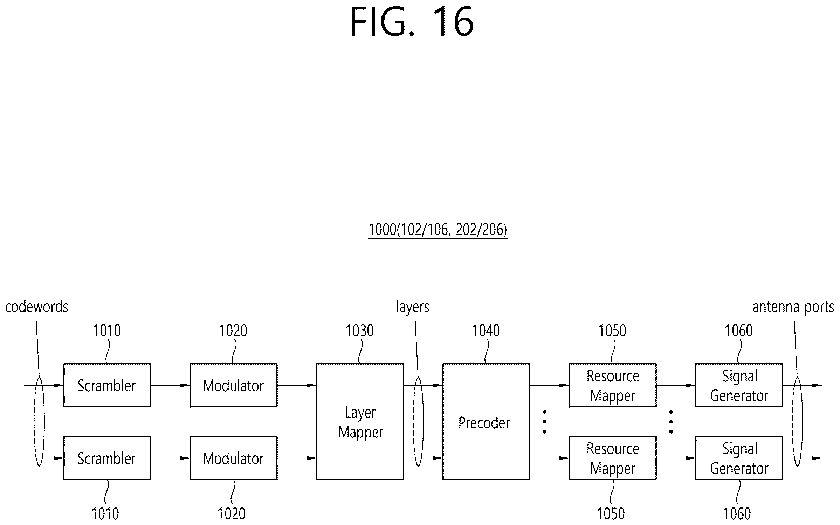

FIG. 16 shows a signal process circuit for a transmission signal, based on an embodiment of the present disclosure. The embodiment of FIG. 16 may be combined with various embodiments of the present disclosure.

Referring to FIG. 16, a signal processing circuit 1000 may include scramblers 1010, modulators 1020, a layer mapper 1030, a precoder 1040, resource mappers 1050, and signal generators 1060. An operation/function of FIG. 16 may be performed, without being limited to, the processors 102 and 202 and/or the transceivers 106 and 206 of FIG. 15. Hardware elements of FIG. 16 may be implemented by the processors 102 and 202 and/or the transceivers 106 and 206 of FIG. 15. For example, blocks 1010 to 1060 may be implemented by the processors 102 and 202 of FIG. 15. Alternatively, the blocks 1010 to 1050 may be implemented by the processors 102 and 202 of FIG. 15 and the block 1060 may be implemented by the transceivers 106 and 206 of FIG. 15.

Codewords may be converted into radio signals via the signal processing circuit 1000 of FIG. 16. Herein, the codewords are encoded bit sequences of information blocks. The information blocks may include transport blocks (e.g., a UL-SCH transport block, a DL-SCH transport block). The radio signals may be transmitted through various physical channels (e.g., a PUSCH and a PDSCH).

Specifically, the codewords may be converted into scrambled bit sequences by the scramblers 1010. Scramble sequences used for scrambling may be generated based on an initialization value, and the initialization value may include ID information of a wireless device. The scrambled bit sequences may be modulated to modulation symbol sequences by the modulators 1020. A modulation scheme may include pi/2-Binary Phase Shift Keying (pi/2-BPSK), m-Phase Shift Keying (m-PSK), and m-Quadrature Amplitude Modulation (m-QAM). Complex modulation symbol sequences may be mapped to one or more transport layers by the layer mapper 1030. Modulation symbols of each transport layer may be mapped (precoded) to corresponding antenna port(s) by the precoder 1040. Outputs z of the precoder 1040 may be obtained by multiplying outputs y of the layer mapper 1030 by an N*M precoding matrix W. Herein, N is the number of antenna ports and M is the number of transport layers. The precoder 1040 may perform precoding after performing transform precoding (e.g., DFT) for complex modulation symbols. Alternatively, the precoder 1040 may perform precoding without performing transform precoding.

The resource mappers 1050 may map modulation symbols of each antenna port to time-frequency resources. The time-frequency resources may include a plurality of symbols (e.g., a CP-OFDMA symbols and DFT-s-OFDMA symbols) in the time domain and a plurality of subcarriers in the frequency domain. The signal generators 1060 may generate radio signals from the mapped modulation symbols and the generated radio signals may be transmitted to other devices through each antenna. For this purpose, the signal generators 1060 may include Inverse Fast Fourier Transform (IFFT) modules, Cyclic Prefix (CP) inserters, Digital-to-Analog Converters (DACs), and frequency up-converters.

Signal processing procedures for a signal received in the wireless device may be configured in a reverse manner of the signal processing procedures 1010 to 1060 of FIG. 16. For example, the wireless devices (e.g., 100 and 200 of FIG. 15) may receive radio signals from the exterior through the antenna ports/transceivers. The received radio signals may be converted into baseband signals through signal restorers. To this end, the signal restorers may include frequency downlink converters, Analog-to-Digital Converters (ADCs), CP remover, and Fast Fourier Transform (FFT) modules. Next, the baseband signals may be restored to codewords through a resource demapping procedure, a postcoding procedure, a demodulation processor, and a descrambling procedure. The codewords may be restored to original information blocks through decoding. Therefore, a signal processing circuit (not illustrated) for a reception signal may include signal restorers, resource demappers, a postcoder, demodulators, descramblers, and decoders.

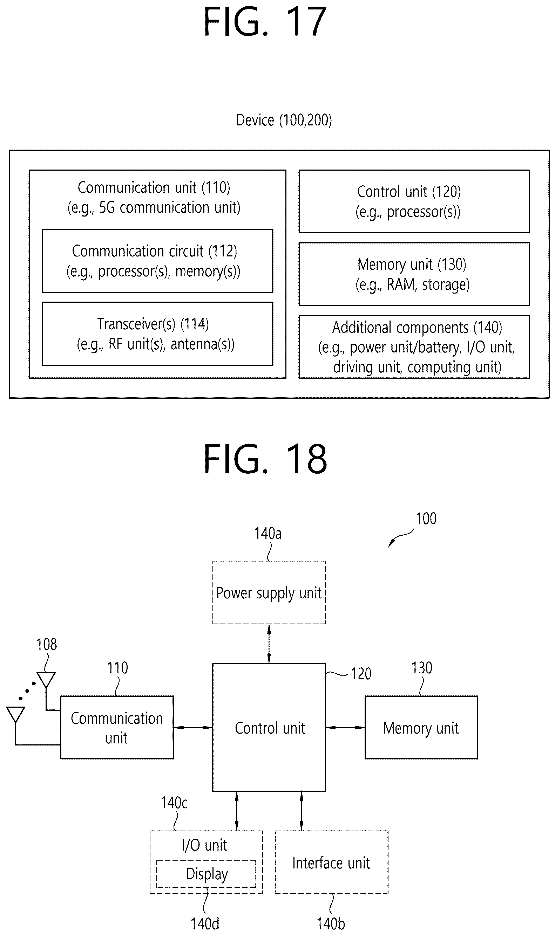

FIG. 17 shows another example of a wireless device, based on an embodiment of the present disclosure. The wireless device may be implemented in various forms according to a use-case/service (refer to FIG. 14). The embodiment of FIG. 17 may be combined with various embodiments of the present disclosure.

Referring to FIG. 17, wireless devices 100 and 200 may correspond to the wireless devices 100 and 200 of FIG. 15 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 15. For example, the transceiver(s) 114 may include the one or more transceivers 106 and 206 and/or the one or more antennas 108 and 208 of FIG. 15. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 14), the vehicles (100b-1 and 100b-2 of FIG. 14), the XR device (100c of FIG. 14), the hand-held device (100d of FIG. 14), the home appliance (100e of FIG. 14), the IoT device (100f of FIG. 14), a digital broadcast terminal, a hologram device, a public safety device, an MTC device, a medicine device, a fintech device (or a finance device), a security device, a climate/environment device, the AI server/device (400 of FIG. 14), the BSs (200 of FIG. 14), a network node, etc. The wireless device may be used in a mobile or fixed place according to a use-example/service.

In FIG. 17, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Hereinafter, an example of implementing FIG. 17 will be described in detail with reference to the drawings.

FIG. 18 shows a hand-held device, based on an embodiment of the present disclosure. The hand-held device may include a smartphone, a smartpad, a wearable device (e.g., a smartwatch or a smartglasses), or a portable computer (e.g., a notebook). The hand-held device may be referred to as a mobile station (MS), a user terminal (UT), a Mobile Subscriber Station (MSS), a Subscriber Station (SS), an Advanced Mobile Station (AMS), or a Wireless Terminal (WT). The embodiment of FIG. 18 may be combined with various embodiments of the present disclosure.

Referring to FIG. 18, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to140c correspond to the blocks 110 to 130/140 of FIG. 17, respectively.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/signals, data, and/or information input by a user. The I/O unit 140c may include a camera, a microphone, a user input unit, a display unit 140d, a speaker, and/or a haptic module.

As an example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

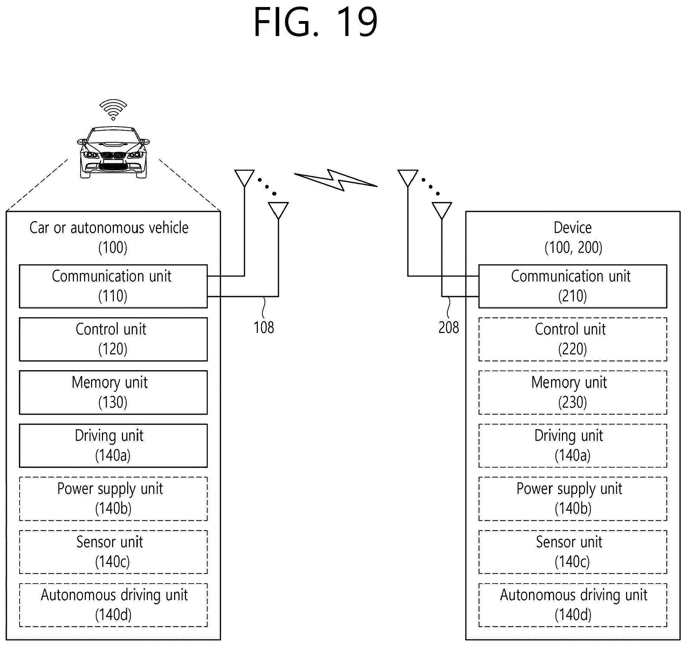

FIG. 19 shows a vehicle or an autonomous vehicle, based on an embodiment of the present disclosure. The vehicle or autonomous vehicle may be implemented by a mobile robot, a car, a train, a manned/unmanned Aerial Vehicle (AV), a ship, etc. The embodiment of FIG. 19 may be combined with various embodiments of the present disclosure.

Referring to FIG. 19, a vehicle or autonomous vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 17, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous vehicle 100. The control unit 120 may include an Electronic Control Unit (ECU). The driving unit 140a may cause the vehicle or the autonomous vehicle 100 to drive on a road. The driving unit 140a may include an engine, a motor, a powertrain, a wheel, a brake, a steering device, etc. The power supply unit 140b may supply power to the vehicle or the autonomous vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous vehicles and provide the predicted traffic information data to the vehicles or the autonomous vehicles.

Claims in the present description can be combined in a various way. For instance, technical features in method claims of the present description can be combined to be implemented or performed in an apparatus, and technical features in apparatus claims can be combined to be implemented or performed in a method. Further, technical features in method claim(s) and apparatus claim(s) can be combined to be implemented or performed in an apparatus. Further, technical features in method claim(s) and apparatus claim(s) can be combined to be implemented or performed in a method.

## Claims

1. A method for performing, by a first device, wireless communication, the method comprising:
performing a plurality of physical sidelink shared channel, PSSCH, receptions based on a plurality of PSSCH resources, from a plurality of devices;
determining a plurality of physical sidelink feedback channel, PSFCH, resources, for performing a plurality of PSFCH transmissions related to the plurality of PSSCH reception, based on the plurality of PSSCH resource;
determining N PSFCH transmissions to be transmitted on at least one resource among the plurality of PSFCH transmissions, that is included in a first PSFCH transmission occasion among the plurality of PSFCH resources; and
performing the N PSFCH transmissions based on, a first spatial setting for a smallest value among at least one priority values related to the N PSFCH transmissions, and the at least one resource.

2. The method of claim 1, further comprising:
receiving, from a second device among the plurality of devices, information for the first PSFCH transmission occasion.

3. The method of claim 1, further comprising:
receiving, from a second device among the plurality of devices, information for a second spatial setting that is used in a first PSSCH transmission performed by the second device.

4. The method of claim 3, wherein a reference signal received power, RSRP, threshold value used for selecting a first resource in which the first PSSCH transmission is performed is configured for the second spatial setting.

5. The method of claim 3, wherein the first PSSCH transmission is related to at least one PSFCH transmission with a smallest value among the at least one priority value, and
wherein the information for the second spatial setting is received through the first PSSCH transmission.

6. The method of claim 5, wherein the second spatial setting is the same as the first spatial setting.

7. The method of claim 1, wherein an RSRP threshold value, that is used for selecting a first resource in which a first PSSCH reception among at least one PSSCH reception related to at least one PSFCH transmission with a smallest value among the at least one priority value is performed, is configured for the first spatial setting.

8. The method of claim 1, wherein a first beam form corresponding to the first spatial setting includes a second beam form corresponding to a second spatial setting for a value that is not a smallest value among the at least one priority value.

9. The method of claim 1, wherein a second spatial setting, that is used for at least one PSSCH transmission related to at least one PSFCH transmission with a smallest value among the at least one priority value, is the same as the first spatial setting.

10. The method of claim 1, wherein a PSSCH transmission performed in the first PSFCH transmission occasion is performed based on the first spatial setting.

11. The method of claim 1, wherein the first spatial setting includes information for a first beam process index.

12. The method of claim 11, wherein the first spatial setting is the same as a second spatial setting, based on the second spatial setting including a second beam process index, that is the same as the first beam process index.

13. The method of claim 1, further comprising:
receiving, from a second device included in the plurality of devices, a measurement result related to a beam.

14. A first device for performing wireless communication, the first device comprising:
at least one transceiver;
at least one processor; and
at least one memory operably connected to the at least one processor and storing instructions that, based on being executed by the at least one processor, cause the first device to perform operations,
wherein the operations comprise:
performing a plurality of physical sidelink shared channel, PSSCH, receptions based on a plurality of PSSCH resources, from a plurality of devices;
determining a plurality of physical sidelink feedback channel, PSFCH, resources, for performing a plurality of PSFCH transmissions related to the plurality of PSSCH reception, based on the plurality of PSSCH resource;
determining N PSFCH transmissions to be transmitted on at least one resource among the plurality of PSFCH transmissions, that is included in a first PSFCH transmission occasion among the plurality of PSFCH resources; and
performing the N PSFCH transmissions based on, a first spatial setting for a smallest value among at least one priority values related to the N PSFCH transmissions, and the at least one resource.

15. A device adapted to control a first user equipment, UE, the device comprising:
at least one processor; and
at least one memory operably connected to the at least one processor and storing instructions that, based on being executed by the at least one processor, cause the first UE to perform operations,
wherein the operations comprise:
performing a plurality of physical sidelink shared channel, PSSCH, receptions based on a plurality of PSSCH resources, from a plurality of UEs;
determining a plurality of physical sidelink feedback channel, PSFCH, resources, for performing a plurality of PSFCH transmissions related to the plurality of PSSCH reception, based on the plurality of PSSCH resource;
determining N PSFCH transmissions to be transmitted on at least one resource among the plurality of PSFCH transmissions, that is included in a first PSFCH transmission occasion among the plurality of PSFCH resources; and
performing the N PSFCH transmissions based on, a first spatial setting for a smallest value among at least one priority values related to the N PSFCH transmissions, and the at least one resource.

16. A non-transitory computer-readable storage medium storing instructions that, based on being executed, cause a first device to:
perform a plurality of physical sidelink shared channel, PSSCH, receptions based on a plurality of PSSCH resources, from a plurality of devices;
determine a plurality of physical sidelink feedback channel, PSFCH, resources, for performing a plurality of PSFCH transmissions related to the plurality of PSSCH reception, based on the plurality of PSSCH resource;
determine N PSFCH transmissions to be transmitted on at least one resource among the plurality of PSFCH transmissions, that is included in a first PSFCH transmission occasion among the plurality of PSFCH resources; and
perform the N PSFCH transmissions based on, a first spatial setting for a smallest value among at least one priority values related to the N PSFCH transmissions, and the at least one resource.

17. A method for performing, by a second device, wireless communication, the method comprising:
transmitting, to a first device, sidelink control information, SCI, for scheduling of a physical sidelink shared channel, PSSCH, transmission through a physical sidelink control channel, PSCCH;
performing the PSSCH transmission to the first device, based on a first device; and
performing a first PSFCH reception from the first device, based on a physical sidelink feedback channel, PSFCH, resource determined based on the first resource,
wherein the first PSFCH reception is a reception for a first PSFCH transmission included in N PSFCH transmissions transmitted by the first device,
wherein the first PSFCH transmission is performed based on a first spatial setting, and
wherein the first spatial setting is a spatial setting for a smallest value among at least one priority value related to the N PSFCH transmission.

18. The method of claim 17, wherein a second spatial setting is used for the PSSCH transmission, and
wherein the SCI includes information for the second spatial setting.

19. A second device for performing wireless communication, the second device comprising:
at least one transceiver;
at least one processor; and
at least one memory operably connected to the at least one processor and storing instructions that, based on being executed by the at least one processor, cause the second device to perform operations,
wherein the operations comprise:
transmitting, to a first device, sidelink control information, SCI, for scheduling of a physical sidelink shared channel, PSSCH, transmission through a physical sidelink control channel, PSCCH;
performing the PSSCH transmission to the first device, based on a first device; and
performing a first PSFCH reception from the first device, based on a physical sidelink feedback channel, PSFCH, resource determined based on the first resource,
wherein the first PSFCH reception is a reception for a first PSFCH transmission included in N PSFCH transmissions transmitted by the first device,
wherein the first PSFCH transmission is performed based on a first spatial setting, and
wherein the first spatial setting is a spatial setting for a smallest value among at least one priority value related to the N PSFCH transmission.

20. The second device of claim 19, wherein a second spatial setting is used for the PSSCH transmission, and
wherein the SCI includes information for the second spatial setting.
